# EUROPÄISCHE PATENTSCHRIFT

(11) **EP 4 685 598 B1**
(45) Veröffentlichungstag und Bekanntmachung des Hinweises auf die Patenterteilung: **21.10.2026**
(21) Anmeldenummer: 25189017.4
(22) Anmeldetag: 11.07.2025
(51) Int. Cl.: G01S 7/41, G01S 7/48, G01S 13/931, G01S 17/931, G06V 10/62, G06V 10/82, G06V 20/58, G06V 20/64, G05D 1/242, G05D 1/633, G01S 17/89

(54) **TRAJEKTORIENVORAUSSAGE IN EINEM AUTONOM BETRIEBENEN FLURFÖRDERZEUG UND VERFAHREN ZUM BETREIBEN DES FLURFÖRDERZEUGS**
TRAJECTORY PREDICTION IN AN AUTONOMOUSLY OPERATED INDUSTRIAL TRUCK AND METHOD FOR OPERATING THE INDUSTRIAL TRUCK
PRÉDICTION DE TRAJECTOIRE DANS UN CHARIOT DE MANUTENTION À FONCTIONNEMENT AUTONOME ET PROCÉDÉ DE FONCTIONNEMENT DU CHARIOT DE MANUTENTION

(30) Priorität: 23.07.2024 DE 102024120934
(43) Veröffentlichungstag der Anmeldung: 28.01.2026
(73) Patentinhaber: Jungheinrich Systemlösungen GmbH, 8042 Graz (AT); Jungheinrich AG, 22047 Hamburg (DE)
(72) Erfinder: PRUTSCH, Alexander, 8042 Graz (AT)
(74) Vertreter: Seemann & Partner Patentanwälte mbB

(56) Entgegenhaltungen:
- US-A1- 2022 048 498
- US-A1- 2022 197 246
- US-A1- 20240 160 212

## Beschreibung

Die Erfindung betrifft ein Flurförderzeug, welches für den autonomen Fahrbetrieb in einer Logistikeinrichtung eingerichtet ist, wobei dieses Flurförderzeug eine Verarbeitungseinheit und einen Sensor aufweist. Der Sensor ist dazu eingerichtet, in einem Umgebungsbereich des Flurförderzeugs 3D Scandaten zu erfassen und einer Verarbeitungseinheit bereitzustellen. Die Verarbeitungseinheit ist dazu eingerichtet, unter Anwendung eines 3D-Objekterkennungsmodells in den 3D Scandaten eine Objekterkennung durchzuführen und unter Anwendung eines Trackingmodells ein Objekttracking durchzuführen und historische Positionsdaten für zumindest ein von dem Sensor erfasstes Objekt festzustellen. Ferner betrifft die Erfindung ein Verfahren zum Betreiben eines solchen Flurförderzeugs.

In Logistikeinrichtungen werden vielfach für den autonomen Fahrbetrieb eingerichtete Flurförderzeuge eingesetzt, die im Folgenden auch als autonome Flurförderzeuge bezeichnet werden sollen. Derartige Flurförderzeuge werden auch als AGV (englisch: automated guided vehicle) oder AMR (englisch: autonomous mobile robot) bezeichnet.

In vielen Fällen soll ein Mischbetrieb zwischen fahrerlosen Flurförderzeugen und manuell geführten Flurförderzeugen realisiert werden. Um die für den autonomen Fahrbetrieb eingerichteten Flurförderzeuge in der Logistikeinrichtung sicher und effizient betreiben zu können, sind diese mit verschiedenen Sensoren zur Umfelderkennung und/oder Umfeldüberwachung ausgerüstet, beispielsweise mit Laserscannern, LiDAR-Scannern, Kameras oder einem 3D-Kamerasystem. Das autonome Flurförderzeug erkennt mit diesen Sensoren Hindernisse und reagiert auf diese durch entsprechende Eingriffe in die Fahrzeugsteuerung. Zur Kollisionsvermeidung stoppt das Fahrzeug in vielen Fällen seine Fahrt, so dass andere Verkehrsteilnehmer, beispielsweise manuell gesteuerte Flurförderzeuge, ausweichen können. Das autonome Flurförderzeug reagiert also vielfach nicht dynamisch auf das Verhalten der anderen Verkehrsteilnehmer in seiner Umgebung.

Ein dynamisches Verhalten würde die Erkennung und Vorhersage von Aktionen und Trajektorien der anderen Verkehrsteilnehmer voraussetzen. In diesem Zusammenhang ist die Vorhersage von Trajektorien anderer Verkehrsteilnehmer von besonderem Interesse. In Kenntnis einer voraussichtlichen Trajektorie eines anderen Verkehrsteilnehmers kann das autonome Flurförderzeug nicht nur Gefahrensituationen vermeiden, sondern durch aktive Gestaltung der eigenen Route auch unnötige Bremsvorgänge vermeiden und auf diese Weise optimieren. Eine effiziente Trajektorienvoraussage verbessert nicht nur die Sicherheit des Verkehrsgeschehens, sondern erhöht auch die Umschlagleistung des autonomen Flurförderzeugs.

Die Verkehrssituation in Logistikeinrichtungen unterscheidet sich grundsätzlich von der Situation, in der Kraftfahrzeuge im öffentlichen Straßenverkehr betrieben werden. Die im Umfeld eines Kraftfahrzeugs im öffentlichen Straßenverkehr stattfindenden Verkehrsbewegungen anderer Verkehrsteilnehmer unterscheiden sich deutlich von den Bewegungen, die die Flurförderzeuge in Logistikeinrichtungen durchführen. Dem Fahrbetrieb im öffentlichen Straßenverkehr liegt eine vollkommen andere Verkehrssituation zugrunde.

Auch im öffentlichen Straßenverkehr eingesetzte autonom oder teilautonom fahrende Fahrzeuge führen eine Trajektorienvoraussage der anderen Verkehrsteilnehmer durch. So können beispielsweise die zukünftig entlang der eigenen Trajektorie stattfindenden Bewegungen anderer Verkehrsteilnehmer, wie beispielsweise eines Pkws, Lkws oder Fußgängers, klassifiziert werden, um so eine vorausschauende Erkennung potentiell kritischer Situationen zu ermöglichen.

Ein für im öffentlichen Straßenverkehr betriebene Kraftfahrzeuge vorgesehenes System geht beispielsweise aus der US 11,276,179 B2 hervor. Bei dem aus diesem Dokument bekannten Verfahren werden mit Hilfe von an dem autonomen Fahrzeug vorhandenen Sensoren Sensordaten des Umfelds erfasst. Auf der Grundlage dieser Sensordaten wird ein Mehrkanalbild in Draufsicht erstellt. Dieses Mehrkanalbild umfasst in einem ersten Kanal die Position der anderen Verkehrsteilnehmer. Neben den Positionen können auch Geschwindigkeits- und Richtungsinformationen dieser Verkehrsteilnehmer erfasst werden. Diese historischen Daten, also eine Information betreffend Position und Geschwindigkeit der Verkehrsteilnehmer, werden für in der Vergangenheit liegende Zeitpunkte in die Karte eingetragen. Aus der zeitlichen Abfolge von Sensordaten wird eine Abfolge historischer Situationsbilder in Draufsicht erzeugt, die die Verkehrssituation für verschiedene in der Vergangenheit liegende Zeitpunkte wiedergibt. Aus den Situationsbildern kann auf eine Bewegungsrichtung und Geschwindigkeit der anderen Verkehrsteilnehmer geschlossen werden. Alle Informationen betreffen in der Vergangenheit liegende Ereignisse.

In einem weiteren Kanal umfasst das Mehrkanalbild die für das autonome Kraftfahrzeug vorgesehene Route. In einem dritten Kanal sind Informationen zur Umgebung des Kraftfahrzeugs vorhanden, beispielsweise Informationen darüber, ob sich die erfassten Verkehrsteilnehmer in einem kartierten oder in einem nichtkartierten Bereich der Umgebung befinden. Auch Informationen betreffend die Abmessungen von Straßen, auf denen das autonome Fahrzeug betrieben wird, können im dritten Kanal gespeichert sein.

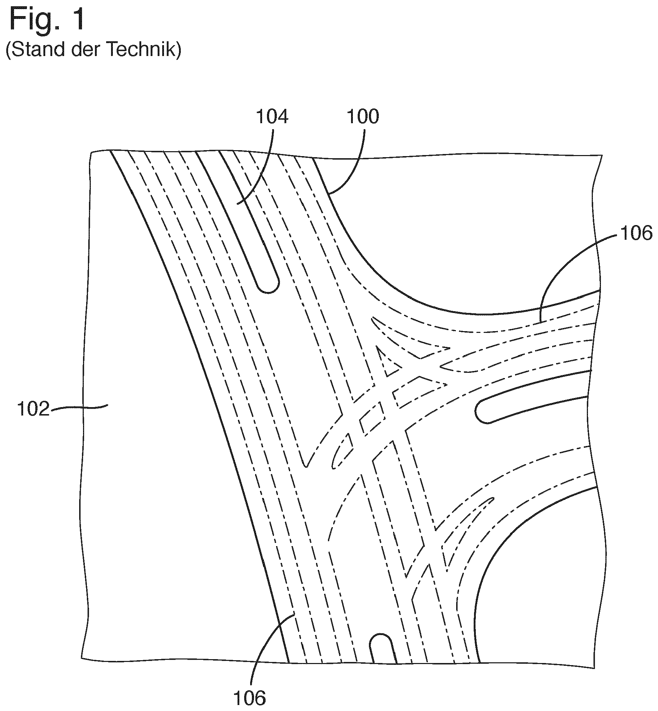

Die in zeitlicher Abfolge gestaffelten Mehrkanalbilder werden einem maschinell trainierten Modell zugeführt, bei dem es sich beispielsweise um ein dreidimensionales neuronales Netz handelt. Dieses neuronale Netz ist für die Verkehrssituation im öffentlichen Straßenverkehr trainiert. Die Vorhersage der Route der anderen Verkehrsteilnehmer und die hieraus abgeleitete Steuerung des autonomen Kraftfahrzeugs beruhen somit maßgeblich auf Randbedingungen, welche ausschließlich für den öffentlichen Straßenverkehr gültig sind. Dies soll kurz anhand von Fig. 1 erläutert werden.

Fig. 1 zeigt einen Straßenplan, wie er der Trajektorienvoraussage in dem aus US 11,276,179 B2 bekannten System für das autonome Fahren im Straßenverkehr gemäß dem Stand der Technik zugrunde gelegt wird. Dargestellt ist eine Kreuzungssituation zweier Straßen. Systeme für das autonome Fahren im Straßenverkehr setzen stets voraus, dass sich die Verkehrsteilnehmer an die allgemeinen Verkehrsregeln halten. Beispielsweise wird vorausgesetzt, dass der Verkehr lediglich auf den Straßen 100 und nicht auf den daran angrenzenden nicht befahrbaren Flächen 102 stattfindet, bei denen es sich beispielsweise um Grünflächen oder Verkehrsinseln 104 handelt. Es wird ferner vorausgesetzt, dass die Verkehrsteilnehmer richtungsgebunden auf jeweils nur einer der beiden Straßenseiten fahren, also beispielsweise Rechtsverkehr gilt. Eine der wichtigsten Randbedingungen für die Trajektorienvoraussage ist die mehr oder weniger strikte Einhaltung der Fahrspuren 106, die in Fig. 1 mit strich-punktierter Linie dargestellt sind. Aus Gründen der Übersichtlichkeit sind lediglich einige der Fahrspuren 106 mit Bezugszeichen versehen. Die vorausgesagten Trajektorien mit der höchsten Wahrscheinlichkeit liegen dementsprechend in den meisten Fällen in der Mitte der Fahrspur 106.

Das oben skizzierte Modell für die dem autonomen Fahren zugrundeliegende Trajektorienvoraussage anderer Verkehrsteilnehmer im Straßenverkehr basiert auf Bedingungen, die für den Verkehr in einer Logistikeinrichtung nicht gültig sind. Beispielsweise werden Rechts- oder Linksfahrgebote nicht unbedingt eingehalten oder sie sind von vorne herein nicht vorgesehen. Sperrbereiche werden mit-unter überfahren, also nicht vergleichbar zu den Verkehrsinseln 104 vom Verkehr respektiert. Ein weiterer wichtiger Unterschied besteht darin, dass in der Logistikeinrichtung Fahrspuren zwar vorhanden sind, ihre Einhaltung jedoch weit weniger strikt als im öffentlichen Straßenverkehr erfolgt. Flurförderzeuge bewegen sich in einer Logistikeinrichtung mehr oder weniger frei in dem ihnen zur Verfügung stehenden Raum.

Außerdem ist das Fahrverhalten der Flurförderzeuge in einer Logistikeinrichtung nicht mit dem Fahrverhalten von Fahrzeugen im allgemeinen Straßenverkehr vergleichbar. Ein Flurförderzeug, welches beispielsweise vor einem Regal steht, kann dort abgestellt sein, es kann einen Ein- und Ausstapelvorgang durchführen oder es kann sich gerade in einer Beladungssituation befinden. Das Flurförderzeug hält für einen längeren Zeitraum direkt in einem Fahrbereich, gegebenenfalls sogar auf einer Fahrspur. Ein Anwendungsfall, wie er im öffentlichen Straßenverkehr in der Regel nicht vorkommt. Ferner kann ein Flurförderzeug, beispielsweise während eines Ein- und Ausstapelvorgangs, wiederholt komplexe Rangierbewegungen durchführen. Derartige Fahrmanöver können im öffentlichen Raum betriebene Fahrzeuge entweder technisch nicht durchführen oder sind praktisch nicht anzutreffen. Flurförderzeuge können über Manövrierfähigkeiten verfügen, beispielsweise Seitwärtsfahrt oder Drehen auf der Stelle, die im öffentlichen Straßenverkehr betriebene Fahrzeuge nicht bereitstellen. Das individuelle Fahrverfahren der Flurförderzeuge in Logistikumgebungen ist mit dem Verhalten von Fahrzeugen im öffentlichen Straßenverkehr nicht vergleichbar.

Im Ergebnis sind aus diesen Gründen Modelle, wie sie für das autonome Fahren im Straßenverkehr eingesetzt werden, für den Einsatz in Logistikeinrichtungen nicht geeignet. Sie liefern in einer Verkehrssituation, wie sie in einer Logistikeinrichtung auftritt, keine brauchbaren Ergebnisse.

US 2024/160212 A1 zeigt ein Koordinationssystem für Roboter, wobei auf der Grundlage eines Umgebungsnavigationsmodells der physischen Umgebung ein oder mehrere simulierte Erfassungswege durch diese Umgebung ermittelt werden.

Es ist eine Aufgabe der Erfindung, ein Flurförderzeug sowie ein Verfahren zum Betreiben eines Flurförderzeugs anzugeben, wobei das Flurförderzeug über eine verbesserte Funktionalität zur Trajektorienvoraussage von in seiner Umgebung erfassten Objekten verfügt.

Die Aufgabe wird gelöst durch ein Flurförderzeug, welches für den autonomen Fahrbetrieb in einer Logistikeinrichtung eingerichtet ist, aufweisend eine Verarbeitungseinheit und zumindest einen Sensor, wobei
- der Sensor dazu eingerichtet ist, in einem Umgebungsbereich des Flurförderzeugs 3D Scandaten zu erfassen und der Verarbeitungseinheit bereitzustellen,
   die Verarbeitungseinheit dazu eingerichtet ist,
- unter Anwendung eines 3D-Objekterkennungmodells in den 3D Scandaten eine Objekterkennung durchzuführen und eine Position und ein Typ eines erkannten Objekts zu erfassen und unter Anwendung eines Trackingmodells anhand von vorhandenen historischen Positionsdaten des Objekts und der erfassten Position des Objekts ein Objekttracking durchzuführen,
   und einen Objektbewegungsmerkmalsvektor zu erzeugen, der einen Bewegungsverlauf des Objekts beschreibt, und
- in dem Objektbewegungsmerkmalsvektor vorhandene Vektorkomponenten mit Parametern zu kombinieren, die spezifische Eigenschaften des erkannten Objekttyps beschreiben, und in einer Bewegungsmatrix abzulegen, und wobei
   in der Verarbeitungseinheit ein Datenspeicher, aufweisend einen Flurplan der Logistikeinrichtung, vorhanden ist, wobei der Flurplan eine Vielzahl von Intralogistik-spezifischen Elementen und eine Vielzahl von Fahrspuren aufweist, und die Verarbeitungseinheit ferner dazu eingerichtet ist,
- Parameter, die spezifische Eigenschaften eines Typs der Fahrspur beschreiben, mit einem Segment der Fahrspur zu kombinieren und in einer Fahrspurmatrix abzulegen,
- Parameter, die spezifische Eigenschaften eines Typs des Intralogistik-spezifischen Elements beschreiben, mit dem Intralogistik-spezifischen Element zu kombinieren und in einer Umgebungsmatrix abzulegen,
- die Bewegungsmatrix, die Fahrspurmatrix und die Umgebungsmatrix zu einer kombinierten Matrix zu verknüpfen, wobei
- in der Verarbeitungseinheit ein als neuronales Netz implementierter Szenenkodierer vorhanden ist und die Verarbeitungseinheit dazu eingerichtet ist, die kombinierte Matrix in dem Szenenkodierer zu verarbeiten, welcher als Ausgabedaten eine Szenenmatrix erzeugt, die den in der Bewegungsmatrix beschriebene Bewegungsverlauf des Objekts in der von der Fahrspurmatrix und der Umgebungsmatrix beschriebenen Umgebung entsprechend einen gelernten Zusammenhang der Bewegung des Objekts in der Umgebung charakterisiert,
- die Szenenmatrix zurück zu transformieren in eine Mehrzahl von jeweils mit einer Wahrscheinlichkeit versehenen vorausgesagten Trajektorien des Objekts.

Das 3D-Objekterkennungmodell arbeitet auf der Grundlage einer Bibliothek von Typen von Flurförderzeugen. Insbesondere ist vorgesehen, dass das 3D-Objekterkennungsmodell auf der Grundlage einer Bibliothek von Typen von Flurförderzeugen arbeitet, die in der Logistikeinrichtung betrieben werden oder zum Betrieb der Logistikeinrichtung vorgesehen sind. Die Objekterkennung in den 3D Scandaten wird detaillierter. So kann beispielsweise nicht nur die allgemeine Aussage getroffen werden: "Es wurde ein Flurförderzeug erkannt", sondern beispielsweise die Aussage: "Es wurde ein Kommissionierer erkannt" oder "Es wurde ein Schubmaststapler erkannt". Bei den von dem Sensor erfassten Daten handelt es sich beispielsweise um Daten, die mit einem LiDAR-Scanner, Radarscanner, einer 3D-Kameraanordnung oder ähnlichem gewonnen wurden. Die Verarbeitungseinheit ist beispielsweise dazu eingerichtet, aus diesen 3D Scandaten eine Punktwolke zu erzeugen. Die Verarbeitungseinheit kann ferner dazu eingerichtet sein, die 3D-Objekterkennung in dieser Punktwolke durchzuführen. Die 3D-Objekterkennung liefert als Ergebnis eine Pose des erkannten Flurförderzeugs, also eine Position und eine Orientierung. Im Kontext der vorliegenden Beschreibung soll unter einer Position auch stets eine Pose verstanden werden, also die Kombination aus Position und Orientierung.

Die 3D-Objekterkennung liefert eine aktuelle Position des in den 3D Scandaten erkannten Flurförderzeugs. Da die 3D-Objekterkennung fortlaufend durchgeführt wird, liegen in der Verarbeitungseinheit auch Informationen vor, an welchen Positionen sich das Objekt in der Vergangenheit befand. Diese Positionen werden als historische Positionen bezeichnet und liegen in der Verarbeitungseinheit vor. Ausgehend von den historischen Positionen und der im Rahmen der Objekterkennung erfassten Position des Objektes, also beispielsweise des Flurförderzeugs, kann anschließend das Objekttracking anhand eines Trackingmodells durchgeführt werden. Bei dem Objekt, welches in den 3D Scandaten des Sensors des Flurförderzeugs erfasst wird, handelt es sich beispielsweise um ein anderes Flurförderzeug. Es kann sich bei dem Objekt jedoch ebenso um ein anderes in der Logistikeinrichtung bewegliches Objekt, beispielsweise eine Person, handeln.

In den 3D Scandaten können Informationen zu mehr als einem einzigen Objekt vorhanden sein. Die 3D-Objekterkennung kann also für mehrere Objekte durchgeführt werden. Es werden für diese Objekte Beobachtungen erzeugt. Es wird jedoch nur für eines der erfassten Objekte eine Trajektorienvoraussage erzeugt, die übrigen Objekte werden als "Umgebung" angesehen.

Die Verarbeitungseinheit des Flurförderzeugs ist ferner insbesondere dazu eingerichtet, die Mehrzahl von Trajektorien auszugeben. Diese Ausgabe erfolgt beispielsweise an eine Funktionseinheit, mit der eine autonome Fahrzeugsteuerung des Flurförderzeugs bereitgestellt wird. Diese Funktionseinheit kann ebenfalls in der Verarbeitungseinheit implementiert sein.

Die erwarteten Trajektorien des Objekts können vorteilhaft für die Planung der eigenen Bewegung des Flurförderzeugs herangezogen werden oder bei dieser Planung berücksichtigt werden. Das Flurförderzeug kann somit aktiv auf seine Umgebung reagieren und seine eigene Fahrbewegung optimieren. Mit anderen Worten reagiert das Flurförderzeug nicht nur passiv auf seine Umgebung, beispielsweise zur Kollisionsvermeidung, sondern passt seine eigene Fahrbewegung aktiv den Geschehnissen in seiner Umgebung an. Beispielsweise kann das Flurförderzeug erkennen, ob das erfasste Objekt den geplanten Pfad der eigenen Bewegung des Flurförderzeugs kreuzen wird. Diese Information kann das Flurförderzeug seiner eigenen Fahrwegsplanung oder Aktionsplanung zugrunde legen oder diese Information bei Entscheidungen über eigene Fahrbewegungen berücksichtigen. Dies geschieht beispielsweise, um unnötiges Bremsen und Beschleunigen zu vermeiden. Die Effizienz des Betriebs des Flurförderzeugs kann so verbessert werden. Ferner kann das Flurförderzeug beispielsweise erkennen, ob das Objekt seinen eigenen geplanten Pfad kreuzt und bereits im Vorfeld proaktiv abbremsen, um eine Notbremsung zu verhindern. Die Sicherheit des Fahrbetriebs wird auf diese Weise verbessert. Das Flurförderzeug kann ebenso eine Richtungsänderung des in den 3D Scandaten erfassten Objekts erkennen und diese Information im Rahmen der eigenen Fahrwegsplanung berücksichtigen. So kann das Flurförderzeug unter Berücksichtigung des Verkehrs in seiner Umgebung einen optimalen Fahrweg finden.

Die Trajektorienvorhersage erfolgt unter Verwendung eines in der Verarbeitungseinheit implementierten Szenenkodierers, bei dem es sich um ein neuronales Netz mit neuartiger Struktur handelt. Diesem neuronalen Netz werden Umgebungsinformationen in Form einer kombinierten Matrix bereitgestellt. Diese kombinierte Matrix ist aus verschiedenen Quellematrizen zusammengefügt.

Parameter, die spezifische Eigenschaften eines Typs eines Intralogistik-spezifischen Elements, beispielsweise einer Durchfahrt, beschreiben, werden mit dem Intralogistik-spezifischen Element kombiniert und in der Umgebungsmatrix abgelegt. Beispielweise wird einer Durchfahrt als Intralogistik-spezifischem Element eine maximale Durchfahrtsgeschwindigkeit zugeordnet. Die Verarbeitung der Intralogistik-spezifischen Elemente kann in einem Umgebungsenkodierer, der als neuronales Netz implementiert sein kann, erfolgen. Die Informationen betreffend die Intralogistik-spezifischen Elemente werden einer Flurkarte, die in der Verarbeitungseinheit vorliegt, entnommen.

Es werden ferner Parameter, die spezifische Eigenschaften eines Typs der Fahrspur beschreiben, mit einem Segment der Fahrspur kombiniert. Es erfolgt beispielsweise eine eindeutige Zuweisung genau einer spezifischen Eigenschaft zu einem Segment der Fahrspur. Diese Informationen werden in der Fahrspurmatrix abgelegt. In der Verarbeitungseinheit kann für diese Funktion ein Fahrspurenkodierer implementiert sein. Bei diesem kann es sich um ein neuronales Netz handeln. Ein Parameter, der eine spezifische Eigenschaft eines Segments der Fahrspur beschreibt, ist beispielsweise eine Gangbreite (des Gangs, in dem die Fahrspur verläuft) oder auch eine auf der Fahrspur maximal zulässige Geschwindigkeit.

Ferner kann in der Verarbeitungseinheit ein beispielsweise als neuronales Netz implementierter Objektbewegungskodierer vorhanden sein. Der Objektbewegungskodierer weist beispielsweise einen Agentenkodierer auf, der Bewegungsdaten, die einen zeitlichen Bewegungsverlauf beschreiben, zumindest eines Objektes in Vektoren umwandelt, die ebenfalls die Bewegung des zumindest einen Objekts beschreiben. Während beispielsweise einzelne Beobachtungen des Objekts die Pose eines Objekts zu verschiedenen Zeitpunkten angeben, kann ein solcher Bewegungsvektor beispielsweise eine Links- oder Rechtskurve des Objektes beschreiben. Außerdem weist der Objektbewegungskodierer eine Einheit auf, die ein Pooling der von dem Agentenkodierer ausgegebenen Daten vornimmt. Bei diesem Vorgang wird die zeitliche Dimension der Daten reduziert. Dies erleichtert die Verarbeitung mit den Daten der Umgebungsmatrix und der Fahrspurmatrix, die keine zeitliche Komponente aufweisen. Nach dem Pooling liegt ein Objektbewegungsmerkmalsvektor vor der die Bewegung des Objekts charakterisiert.

Die in dem Objektbewegungsmerkmalsvektor vorhandenen Vektorkomponenten werden nun mit Parametern kombiniert, die spezifische Eigenschaften des erkannten Objekttyps beschreiben. Neben der Position des Objekts kann also auch dessen Typ berücksichtigt werden. Ist das Objekt ein Flurförderzeug kann beispielsweise berücksichtigt werden, ob es sich um einen Kommissionierer oder um einen Schubmaststapler handelt. Spezifische Eigenschaften des Typs sind beispielsweise dessen Manövrier- oder Fahreigenschaften, beispielsweise dessen maximale Fahrgeschwindigkeit oder typische Bewegungsmuster oder Fahrbewegungen. So bewegen sich Kommissionierer im Bereich von Regalen typischerweise ausschließlich parallel zu den Regalen, während Schubmaststapler auch Ein- und Ausstapelvorgänge durchführen. Diese Informationen werden in der Bewegungsmatrix abgelegt, welche das neuronale Netz als Ausgabedaten liefern kann.

Die Umgebungsmatrix, Fahrspurmatrix und Bewegungsmatrix werden anschließend zusammengefügt (konkateniert, engl. concatenate). Das Ergebnis ist eine größere Matrix, in der alle drei Quellenmatrizen enthalten sind. Diese Matrix wird dem Szenenkodierer bereitgestellt, bei dem es sich ebenfalls um ein neuronales Netz handelt. Dieses liefert als Ausgabedaten die Szenenmatrix, welche den Bewegungsverlauf des Objekts in seiner Umgebung entsprechend einen gelernten Zusammenhang charakterisiert.

Der von dem Szenenkodierer ausgegebene in der Szenenmatrix vorhandene Parametersatz berücksichtigt auf diese Weise den Einfluss der in der Logistikeinrichtung vorhandenen Umgebungselemente auf die Bewegung der erfassten Objekte. Solche Umgebungselemente können beispielsweise Infrastrukturelemente der Logistikeinrichtung, wie Regale, Durchfahrten, Begrenzungen, Säulen oder dergleichen sein. Ebenso kann es sich bei den Umgebungselementen um funktionelle Einheiten der Logistikeinrichtung wie beispielsweise Palettenplätze, Be- und Entladezonen, elektrische Aufladestationen für Flurförderzeuge oder dergleichen handeln. Die erkannte Bewegung des Objekts wird somit nicht nur im Kontext seiner unmittelbaren Verkehrsumgebung, beispielsweise der Bewegung auf einer Fahrspur, sondern auch im Kontext der in der Logistikeinrichtung vorhandenen weiteren Elemente berücksichtigt. Da Flurförderzeuge stets mit den Elementen einer Logistikeinrichtung interagieren, ja für diese Interaktion in der Logistikeinrichtung betrieben werden, steht die Bewegung des Flurförderzeugs stets auch im Kontext zu diesen Elementen der Logistikeinrichtung. Es wird darüber hinaus die Natur dieser speziellen Interaktion und deren Einfluss auf die zu erwartenden Bewegungen des Objekts berücksichtigt. Beispielsweise muss ein Flurförderzeug von Zeit zu Zeit eine elektrische Ladestation anfahren. An dieser Ladestation zeigt das Flurförderzeug ein charakteristisches Fahrverhalten. Es wird die Ladestation beispielsweise in einer bestimmten und wiederkehrenden Fahrbewegung anfahren. Anschließend wird es an der Ladestation für eine mittlere zu erwartende Ladezeit stehen. Ein Flurförderzeug wird außerdem in einer Logistikeinrichtung betrieben, um Waren oder Lastenträger von und zu Be- und Entladezonen zu transportieren. Auch an diesen Intralogistik-spezifischen Elementen zeigt das Flurförderzeug wieder ein typisches Verhalten. Es wird beispielsweise den Lastenträger in einer Beladezone aufnehmen und hierzu eine typische Fahrbewegung ausführen. Ebenso wird das Flurförderzeug beim Abladen des Lastenträgers an einer Entladezone ein typisches Fahrverhalten zeigen. Die obigen Betrachtungen gelten nicht nur für Flurförderzeuge, sondern ebenso für andere erfasste bewegliche Objekte, beispielsweise für Personen. So ist zu erwarten, dass sich eine Person im Bereich eines Fußgängerwegs anders verhält, als eine Person, die sich in einem Aufenthaltsbereich befindet. Während bei der ersten Person damit gerechnet werden kann, dass sich diese in Bewegung befindet und ggf. einen angrenzenden Fahrbereich betritt und beispielsweise auch überquert, kann bei der zweiten Person, davon ausgegangen werden, dass diese sich nicht bewegt, beispielsweise weil sie gerade ihre Pause verbringt. Die beschriebenen Bewegungsmuster stehen stets im Kontext zu Elementen der Intralogistikeinrichtung. Die zusätzliche Berücksichtigung der Intralogistik-spezifischen Elemente im Rahmen des Trainings des neuronalen Netzes zur Trajektorienvoraussage liefert gegenüber herkömmlichen Lösungen eine qualitativ verbesserte Voraussage für die Trajektorien.

Gemäß einer vorteilhaften Ausführungsform ist das Flurförderzeug dadurch fortgebildet, dass die Verarbeitungseinheit einen als neuronales Netz implementierten Objektbewegungskodierer aufweist, der die in dem Objektbewegungsmerkmalsvektor vorhandene Vektorkomponenten mit Parametern kombiniert, die spezifische Eigenschaften des erkannten Objekttyps beschreiben, und als Ausgabedaten die Bewegungsmatrix erzeugt, wobei der Objektbewegungskodierer ein auf der Grundlage von in einer, insbesondere der, Logistikeinrichtung gewonnenen Informationen vortrainiertes neuronales Netz ist. Insbesondere ist das neuronale Netz mithilfe historischer Positionsdaten trainiert, die innerhalb einer oder mehrerer Logistikeinrichtung(en) gewonnen worden sind. Ein Training des neuronalen Netzes anhand von historischen Positionsdaten, die in exakt der Logistikeinrichtung, in der das Flurförderzeug später betrieben wird, gewonnen werden, führt zu einer besonders zuverlässigen Voraussage des Objektbewegungsmerkmalssektors. Es können durch diese spezielle Art des Trainings des neuronalen Netzes die für die Logistikeinrichtung spezifischen Bewegungsmuster vortrainiert werden.

Das Flurförderzeug ist ferner insbesondere dadurch fortgebildet, dass die Parameter, welche spezifische Eigenschaften des Objekttyps beschreiben, und die zur Kombination mit den Vektorkomponenten des Objektbewegungsmerkmalsvektor vorgesehen sind, zeitlich invariante Parameter sind, die eine Bewegungsfähigkeit des Objekts kennzeichnen.

Handelt es sich bei dem Objekt um ein Flurförderzeug, so kann im Rahmen der Objekterkennung nicht nur die Position dieses Flurförderzeugs, sondern auch ein Typ des Flurförderzeugs erkannt werden. Als weitere Informationen, welche zur Voraussage des Objektbewegungsmerkmalvektors und schlussendlich zur Voraussage der Trajektorie des Objekts ausgewertet werden, sind zeitlich invariante Parameter dieses Objekts, insbesondere eines Flurförderzeugs. Beispielsweise können Parameter wie ein maximaler Lenkwinkel, eine maximale Beschleunigung, Abmessungen des Flurförderzeugs, eine gängige Fahrgeschwindigkeit oder andere Charakteristika des Flurförderzeugs für die Auswertung mit herangezogen werden. Alle diese zusätzlichen Informationen verbessern die Trajektorienvoraussage.

Gemäß einer weiteren Ausführungsform ist das Flurförderzeug dadurch fortgebildet, dass die spezifischen Eigenschaften des Typs der Fahrspur beschreibenden Parameter von einer Position der Fahrspur innerhalb der Logistikeinrichtung abhängig sind. Informationen, welche Parameter beschreibend eine Position der Fahrspur innerhalb der Logistikeinrichtung beschreiben, berücksichtigen das spezielle Fahrverhalten des Flurförderzeugs in diesem Bereich der Fahrspur. Beispielsweise wird eine Gangbreite des Gangs, in dem die Fahrspur verläuft, die Tatsache, dass es sich um eine Einbahn oder eine Zweirichtungsspur handelt oder auch eine maximal zulässige Geschwindigkeit das Fahrverhalten des Flurförderzeugs auf der Fahrspur beeinflussen.

Das Flurförderzeug ist ferner insbesondere dadurch fortgebildet, dass die Intralogistik-spezifischen Elemente der Logistikeinrichtung Infrastrukturelemente der Logistikeinrichtung sind, die insbesondere durch Parameter beschreibend eine Lage und/oder Dimension von zumindest einem Tor, einer Durchfahrt, einem Nichtfahrbereich, einer Lagerposition, einer Abstellposition, einer Ladestation, einem Regal, einem Abstellbereich für Flurförderzeuge und/oder einer Be- oder Entladezone gekennzeichnet sind.

Gemäß einer weiteren vorteilhaften Ausführungsform ist das Flurförderzeug dadurch fortgebildet, dass der Sensor und die Verarbeitungseinheit dazu eingerichtet sind, durch Erfassen von 3D Scandaten, Erzeugen von Punktwolken und Anwendung des 3D-Objekterkennungmodells auf die Punktwolken eine 3D-Objekterkennung in der Punktwolke durchzuführen und Positionsdaten des Objekts für unterschiedliche Zeitpunkte zu bestimmen.

Das Flurförderzeug ist ferner insbesondere dadurch fortgebildet, dass die Verarbeitungseinheit ferner dazu eingerichtet ist, die Funktionalität des autonomen Fahrbetriebs bereitzustellen, wobei die Verarbeitungseinheit ferner dazu eingerichtet ist, dieser Funktionalität die Mehrzahl von jeweils mit einer Wahrscheinlichkeit versehenen vorausgesagten Trajektorien des Objekts bereitzustellen.

Die Aufgabe wird außerdem gelöst durch Verfahren zum Betreiben eines Flurförderzeugs, welches für den autonomen Fahrbetrieb eingerichtet ist, in einer Logistikeinrichtung, wobei das Flurförderzeug eine Verarbeitungseinheit und zumindest einen Sensor aufweist, und wobei
- der Sensor in einem Umgebungsbereich des Flurförderzeugs 3D Scandaten erfasst und der Verarbeitungseinheit bereitstellt,
   die Verarbeitungseinheit
- ein 3D-Objekterkennungmodell auf die 3D Scandaten anwendet, in den 3D Scandaten eine Objekterkennung durchführt und eine Position und einen Typ eines erkannten Objekts erfasst, und ein Trackingmodell auf die erkannten Objekte anwendet und anhand von vorhandenen historischen Positionsdaten des Objekts und der erfassten Position des Objekts ein Objekttracking durchführt,
   und einen Objektbewegungsmerkmalsvektor erzeugt, der einen Bewegungsverlauf des Objekts beschreibt, und
- in dem Objektbewegungsmerkmalsvektor vorhandene Vektorkomponenten mit Parametern kombiniert, die spezifische Eigenschaften des erkannten Objekttyps beschreiben, und in einer Bewegungsmatrix ablegt, und wobei
   in einem Datenspeicher der Verarbeitungseinheit ein Flurplan der Logistikeinrichtung vorhanden ist, wobei der Flurplan eine Vielzahl Intralogistik-spezifischen Elementen und eine Vielzahl von Fahrspuren aufweist, und die Verarbeitungseinheit ferner
- Parameter, die spezifische Eigenschaften eines Typs der Fahrspur beschreiben, mit einem Segment der Fahrspur kombiniert und in einer Fahrspurmatrix ablegt und
- Parameter, die spezifische Eigenschaften eines Typs des Intralogistik-spezifischen Elements beschreiben, mit dem Intralogistik-spezifischen Element zu kombinieren und in einer Umgebungsmatrix ablegt,
- die Bewegungsmatrix, die Fahrspurmatrix und die Umgebungsmatrix zu einer kombinierten Matrix verknüpft, wobei
- in der Verarbeitungseinheit ein als neuronales Netz implementierter Szenenkodierer vorhanden ist, und die Verarbeitungseinheit die kombinierte Matrix in dem Szenenkodierer verarbeitet, welcher als Ausgabedaten eine Szenenmatrix erzeugt, die den in der Bewegungsmatrix beschriebene Bewegungsverlauf des Objekts in der von der Fahrspurmatrix und der Umgebungsmatrix beschriebenen Umgebung entsprechend einen gelernten Zusammenhang der Bewegung des Objekts in der Umgebung charakterisiert,
- die Szenenmatrix zurück transformiert wird, in eine Mehrzahl von jeweils mit einer Wahrscheinlichkeit versehenen vorausgesagten Trajektorien des Objekts.

Auf das Verfahren zum Betreiben des Flurförderzeugs treffen gleiche oder ähnliche Vorteile zu, wie sie bereits im Hinblick auf Flurförderzeug selbst erwähnt wurden, so dass auf Wiederholungen verzichtet werden soll.

Das Verfahren ist insbesondere dadurch fortgebildet, dass die Verarbeitungseinheit einen als neuronales Netz implementierten Objektbewegungskodierer aufweist, der die in dem Objektbewegungsmerkmalsvektor vorhandene Vektorkomponenten mit Parametern kombiniert, die spezifische Eigenschaften des erkannten Objekttyps beschreiben, und als Ausgabedaten die Bewegungsmatrix erzeugt, wobei der Objektbewegungskodierer ein auf der Grundlage von in einer, insbesondere der, Logistikeinrichtung gewonnenen Informationen vortrainiertes neuronales Netz ist.

Das Training findet also mit anderen Worten auf der Grundlage von Trainingsdaten statt, die in einer Logistikeinrichtung gewonnen wurden. In diesem Zusammenhand können Trainingsdaten verwendet werden, die in einer oder mehreren Logistikeinrichtung(en) gewonnen wurden. Insbesondere sind die Trainingsdaten in exakt der Logistikeinrichtung gewonnen worden, in der das Verfahren später ausgeführt wird.

Das Verfahren ist ferner insbesondere dadurch fortgebildet, dass die die spezifischen Eigenschaften des Objekttyps beschreibenden Parameter, welche mit den Vektorkomponenten des Objektbewegungsmerkmalsvektors kombiniert werden, zeitlich invariante, eine Bewegungsfähigkeit des Objekts kennzeichnende Parameter sind.

Vorteilhaft ist das Verfahren ferner dadurch fortgebildet, dass die die spezifischen Eigenschaften des Typs der Fahrspur beschreibenden Parameter von einer Position der Fahrspur innerhalb der Logistikeinrichtung abhängig sind.

Das Verfahren ist ferner insbesondere dadurch fortgebildet, dass die als Umgebungselemente der Logistikeinrichtung berücksichtigten Intralogistik-spezifischen Elemente Infrastrukturelemente der Logistikeinrichtung sind, die insbesondere durch Parameter beschreibend: eine Lage und/oder Dimension von zumindest einem Tor, einer Durchfahrt, einem Nichtfahrbereich, einer Lagerposition, einer Abstellposition, einer Ladestation, einem Regal, einem Abstellbereich für Flurförderzeuge und/oder einer Be- oder Entladezone gekennzeichnet sind.

Gemäß einer weiteren Ausführungsform ist das Verfahren dadurch fortgebildet, dass der Sensor und die Verarbeitungseinheit 3D Scandaten erfassen, Punktwolken erzeugen und das 3D-Objekterkennungmodell auf die Punktwolken anwenden, eine 3D-Objekterkennung in der Punktwolke durchführen und Positionsdaten des Objekts für unterschiedliche Zeitpunkte bestimmen.

Gemäß einer weiteren vorteilhaften Ausführungsform ist das Verfahren dadurch fortgebildet, dass die Verarbeitungseinheit ferner die Funktionalität für den autonomen Fahrbetrieb des Flurförderzeugs bereitstellt, wobei dieser Funktionalität die Mehrzahl von jeweils mit einer Wahrscheinlichkeit versehenen vorausgesagten Trajektorien des Objekts bereitgestellt werden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: einen Straßenplan, wie er in Systemen für das autonome Fahren im Straßenverkehr eingesetzt wird (gemäß dem Stand der Technik),
- Fig. 2: ein Flurförderzeug in schematischer Darstellung,
- Fig. 3: eine schematische Illustration einer Verkehrssituation in einer Logistikeinrichtung,
- Fig. 4.: ein schematisches Funktionsdiagramm für eine Trajektorien-Voraussage und
- Fig. 5: ein weiteres Funktionsdiagramm, in welchem eine Verarbeitung der in einer Szenenmatrix vorhandenen Informationen zur Bestimmung von vorausgesagten Trajektorien erläutert wird.

In den Zeichnungen sind jeweils gleiche oder gleichartige Elemente und/oder Teile mit denselben Bezugsziffern versehen, so dass von einer erneuten Vorstellung jeweils abgesehen wird.

Fig. 1 zeigt einen Straßenplan, in dem eine Kreuzungssituation zweiter Straßen dargestellt ist. Ein solcher Plan wird Systemen zugrunde gelegt, wie sie für die Trajektorien-Voraussage im Straßenverkehr eingesetzt werden. Ein solcher Plan gemäß dem Stand der Technik kommt in dem erfindungsgemäßen Flurförderzeug und dem erfindungsgemäßen Verfahren nicht zum Einsatz.

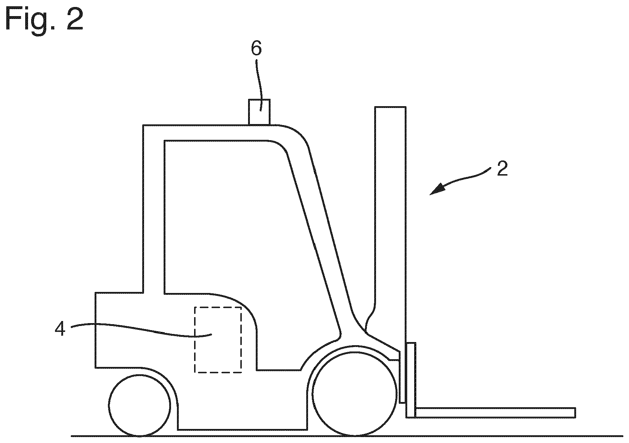

Fig. 2 zeigt ein Flurförderzeug 2, welches für den autonomen Fahrbetrieb in einer Logistikeinrichtung eingerichtet ist. Zu diesem Zweck weist das Flurförderzeug 2 eine Verarbeitungseinheit 4 und einen Sensor 6 auf, bei dem es sich beispielsweise um einen LiDAR-Scanner, einen Radar-Scanner oder eine 3D-Kameraanordnung handelt. Weitere allgemein bekannte Bauteile, Ausstattungsmerkmale und Elemente des Flurförderzeugs 2, wie beispielsweise der Hubmast oder die Lastgabel, spielen im Kontext der vorliegenden Beschreibung eine untergeordnete Rolle und sollen daher nicht näher erläutert werden.

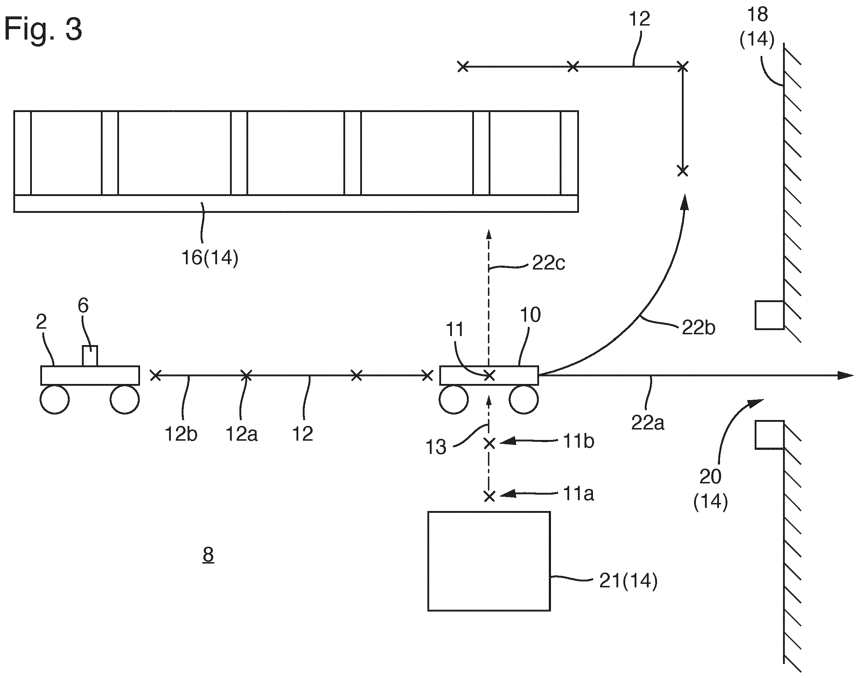

Fig. 3 zeigt eine Verkehrssituation, wie sie in einer Logistikeinrichtung 8 beispielhaft auftreten kann. Die Darstellung ist stark schematisiert und vereinfacht. Der Sensor 6 des Flurförderzeugs 2 ist dazu eingerichtet, im Umgebungsbereich des Flurförderzeugs 2, der primär durch die Reichweite des verwendeten Sensors 6 bestimmt ist, 3D Scandaten zu erfassen. Diese 3D Scandaten werden der Verarbeitungseinheit 4 des Flurförderzeugs 2 bereitgestellt. Es ist nicht erforderlich, dass die Verarbeitungseinheit 4 innerhalb des Flurförderzeugs 2 angeordnet ist. Es kann ebenso vorgesehen sein, dass das Flurförderzeug 2 die von dem Sensor 6 erfassten 3D Scandaten an eine weitere Einheit, beispielsweise einen Zentralrechner der Logistikeinrichtung 8, übermittelt, die weitere Verarbeitung der Daten dort vorgenommen wird und das Ergebnis anschließend an das Flurförderzeug 2 zurück kommuniziert wird. Die Verarbeitungseinheit 4 kann ebenso als Cloudservice implementiert sein.

Die Verarbeitungseinheit 4 ist dazu eingerichtet, unter Anwendung eines 3D-Objekterkennungsmodells, welches in der Verarbeitungseinheit 4 implementiert ist, in den 3D Scandaten eine Objekterkennung durchzuführen. Bei den 3D Scandaten handelt es sich beispielsweise um eine Punktwolke, die von der Verarbeitungseinheit 4 unter Anwendung des 3D-Objekterkennungsmodells verarbeitet wird. In dieser Punktwolke wird eine 3D Objekterkennung durchgeführt und auf diese Weise wird eine Position zumindest eines in der Punktwolke erkennbaren Objekts 10 bestimmt, beispielsweise die Position eines Flurförderzeugs. Im Kontext der vorliegenden Beschreibung soll unter eine Position auch stets eine Pose, also die Kombination aus Position und Orientierung des erkannten Objekts, verstanden werden.

Der Sensor 6 des Flurförderzeugs 2 erfasst fortlaufend die Umgebung und die Verarbeitungseinheit 4 führt in der aus den 3D Scandaten erzeugten Punktwolke ebenso fortlaufend eine 3D-Objekterkennung durch. Es werden also permanent die Positionen der Objekte 10 erfasst, die sich im Scanbereich des Sensors 6 befinden. So liegen in der Verarbeitungseinheit 4 Informationen vor, an welchen Positionen sich das Objekt in der Vergangenheit befand. Diese Positionen sollen als historische Positionen bezeichnet werden und sind mit 11a und 11b bezeichnet. Die aktuell für das Objekt 10 bestimmte Position wird mit Bezugszeichen 11 bezeichnet.

In den 3D Scandaten sind in der Regel Informationen zu mehr als einem einzigen Objekt 10 vorhanden. Die Darstellung in Fig. 3 zeigt lediglich beispielhaft und aus Gründen der besseren Darstellbarkeit lediglich ein einziges Objekt 10. Die 3D-Objekterkennung kann prinzipiell für mehrere Objekte 10 durchgeführt werden. Abhängig davon, für welches der erfassten Objekte 10 eine Trajektorienvoraussage durchgeführt werden soll, wird nur die Bewegung dieses Objekts 10 analysiert. Dies wird weiter unten detailliert erläutert. Die übrigen Objekte 10 werden als "Umgebung" angesehen.

Ausgehend von den historischen Positionen 11a, 11b und der aktuell erfassten Position des Objekts 10 kann das Objekttracking mit dem Trackingmodell durchgeführt werden. Dieses ist in der Verarbeitungseinheit 4 implementiert. Die Datengrundlage für das Trackingmodell liefert die 3D-Objekterkennung. Unter Anwendung des Trackingmodells werden aus den historischen Positionsdaten 11a und 11b sowie der aktuellen Position 11 des erkannten Objekts 10 dessen historische Objekttrajektorie 13 ermittelt. Es soll beispielhaft angenommen werden, dass sich das als Objekt 10 erkannte Flurförderzeug ausgehend von einer Be- und Entladezone 21 zu einem Regal 16 bewegt.

Das Regal 16 ist beispielhaft lediglich von der in Fig. 3 oben dargestellten Seite her bestückbar. Das Flurförderzeug 10 wird also, ausgehend von der Be- und Entladezone 21, um das Regal 16 herumfahren müssen, um dieses aus einer in Fig. 3 von oben nach unten weisenden Richtung zu beladen.

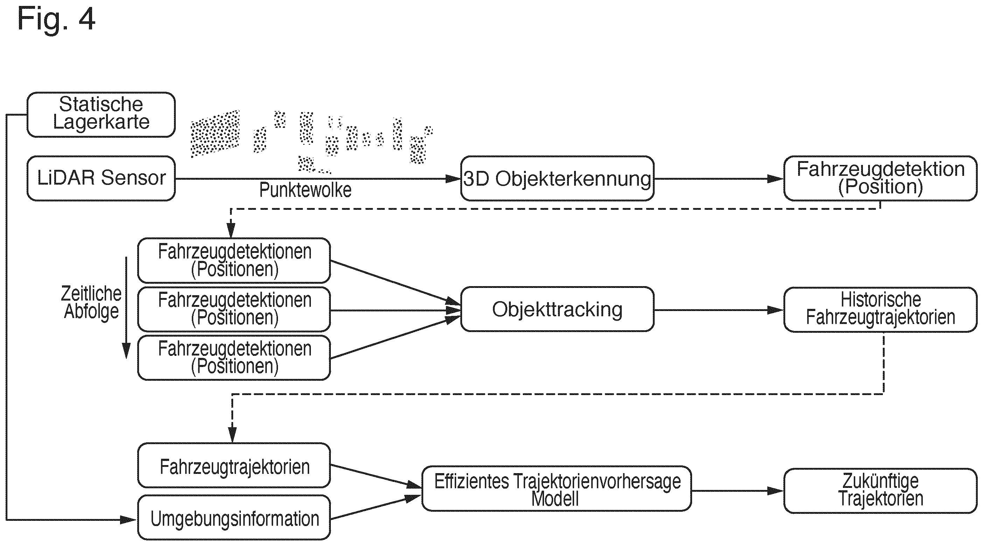

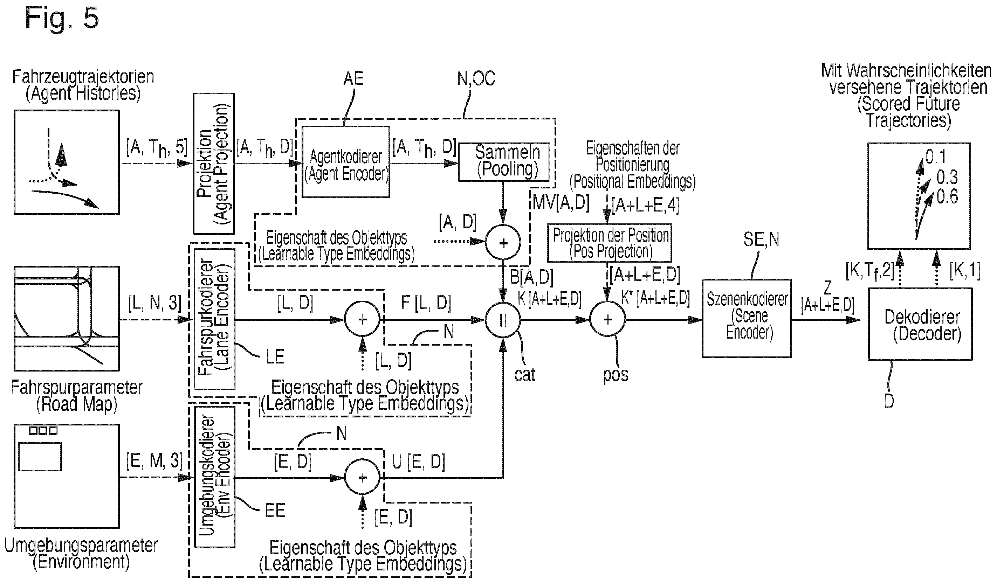

Fig. 4 zeigt ein schematisch vereinfachtes Funktionsdiagramm für die im Folgenden erläuterte Trajektorien-Voraussage für die Bewegung des Objekts 10. Fig. 5 zeigt eine schematische Darstellung der Verarbeitung dieser Informationen in der Verarbeitungseinheit 4. Diese Verarbeitung führt zur Voraussage verschiedener Trajektorien des erfassten Objekts 10. In der folgenden Beschreibung soll auf die Fig. 3 bis 5 gemeinsam Bezug genommen werden.

In Fig. 4 ist die Erkennung des Objekts 10 mit Hilfe des Sensors 6 als mit "LiDAR-Sensor" bezeichnete Funktion illustriert. Das Ergebnis dieser Objekterfassung ist eine Punktwolke, welche schematisch angedeutet ist. Anhand dieser Punktwolke wird die 3D-Objekterkennung durchgeführt. Im Rahmen dieser 3D-Objekterkennung wird die Position 11 des Objekts 10 und ein Typ des Objekts 10 festgestellt. Beispielsweise kann im Rahmen der 3D-Objekterkennung festgestellt werden, dass es sich bei dem Objekt 10 um ein Objekt vom Typ "Flurförderzeug-Schubmaststapler" handelt. Die Fahrzeugtypdetektion und Positionserfassung werden in zeitlicher Abfolge, wie in Fig. 4 in senkrechter, von oben nach unten weisender Richtung schematisch dargestellt, durchgeführt. Diese einzelnen Positionen der erfassten Objekte 10, bei denen es sich beispielsweise um Fahrzeuge, aber auch um Personen oder andere bewegliche Objekte in der Logistikeinrichtung 8 handeln kann, bilden die historischen Positionsdaten 11a, 11b, die jüngsten und aktuellen Daten bezeichnet die Position 11 des Flurförderzeugs. Anhand der historischen und aktuellen Positionsdaten wird mit Hilfe des Objekttrackings zunächst die historische Fahrzeugtrajektorie 13, die in Fig. 3 mit strichpunktierter Linie dargestellt ist, bestimmt. Diese weist, dem verwendeten Beispiel folgend, von der Be- und Entladezone 21 in Richtung der aktuellen Position des Objekts 10.

In Fig. 5 sind diese historischen Fahrzeugtrajektorien 13 als "Agent Histories" bezeichnet. Die historischen Positionsdaten werden in einem Vektor [A, Tₕ, 5] dargestellt. Die Vektoinformationen beschreiben A Objekte, die zu den einzelnen Zeitpunkten Tₕ, zu denen beispielsweise die historischen Positionsdaten 11a, 11b oder die aktuelle Position 11 erfasst wurden. Die Dimension der Beobachtung ist beispielhaft 5. Sie umfasst eine x-Koordinate, eine y-Koordinate, je einen Beschleunigungswert in x-Richtung und in y-Richtung sowie einen binären Wert, der angibt, ob das Objekt A zu einem vorgegebenen Zeitpunkt beobachtet wurde oder nicht.

In einem Schritt, der mit "Agent Projection" bezeichnet ist, erfolgt eine Vorbereitung dieser Informationen zur Verarbeitung in einem Agentenkodierer AE, auch bezeichnet als "Agent Encoder", der als neuronales Netz N implementiert sein kann. Im Wesentlichen erfolgt in der Agentenprojektion ("Agent Projection" eine Erweiterung der Dimensionalität der Informationen von der Dimension 5 auf eine Dimension D, die beispielsweise 64, 128 oder 256 beträgt. Die Bewegungsdaten der Objekte A werden auf diese Weise für die Verarbeitung im neuronalen Netz N des Agentenkodierers AE vorbereitet.

Der Agentenkodierer AE, ist dazu eingerichtet, die historischen Positionsdaten 11a, 11b und die aktuelle Position 11 der erkannten Objekte A, deren Dimension auf D erweitert wurde, als Eingangsdaten zu empfangen. Der Agentenkodierer AE setzt die einzelnen Zeitstempel [A, Tₕ, D] der Bewegung um in einen Vektor, der die Art der Bewegung des Objekts A beschreibt. Beispielsweise beschreibt ein solcher Vektor, dass das Objekt A eine Linkskurve oder eine Rechtskurve durchfährt, oder das Objekt A beschleunigt oder verzögert.

Anschließend übergibt der Agentenencoder AE die Ausgangsdaten an einen Zwischenschritt, in dem eine Pooling-Operation durchgeführt wird. In diesem Schritt erfolgt eine Dimensionsreduzierung, bei der eine Reduktion der zeitlichen Komponente vorgenommen wird Das Ergebnis ist ein Objektbewegungsmerkmalsvektor MV [A, D], der die Bewegung von A Objekten in einer Dimension D beschreibt und die Art der Bewegung kennzeichnet.

Das neuronale Netz N kann anhand von Bewegungsinformationen vortrainiert sein, die in derjenigen Logistikeinrichtung 8 gewonnen wurden, in der das Flurförderzeug 2 später betrieben wird. Der Objektbewegungsmerkmalsvektor MV wird in einem weiteren Verarbeitungsschritt des neuronalen Netzes N mit sogenannten "Learnable Type Embeddings" kombiniert. Diese spezifischen Informationen spiegeln Eigenschaften des Objekttyps wider und werden mit den Vektorkomponenten des Objektbewegungsmerkmalsvektors MV kombiniert. Parameter, die spezifische Eigenschaften des Objekttyps beschreiben, sind beispielsweise zeitlich invariante, eine Bewegung- oder Manövrierfähigkeit des Objekts 10 kennzeichnende Parameter. Beispielsweise haben verschiedene Typen von Flurförderzeugen bestimmte Manövrierfähigkeiten, können also bestimmte Fahrmanöver ausführen oder nicht. Diese Informationen, wenn sie mit den in dem Objektbewegungsmerkmalsvektor MV vorhandenen Informationen kombiniert werden, verbessern die Qualität und Aussagekraft des Objektbewegungsmerkmalsvektors MV, der einen Bewegungsverlauf der A Objekte und somit unter anderem des Objekts 10 beschreibt. Die am Ende dieser Verarbeitung erhaltenen Informationen werden in einer Bewegungsmatrix B (A, D) abgelegt.

Der Agentenkodierer AE, die Pooling Einheit und diejenige Einheit die die Kombination mit den spezifischen Eigenschaften des Objekttyps vornimmt, wobei es sich um funktionelle Einheiten handeln kann, bilden gemeinsam einen Objektbewegungskodierer OC. Die genannten Einheiten können als einzelne neuronale Netze oder als ein gemeinsames neuronales Netz implementiert sein.

Der Trajektorien-Voraussage, welche am Ende des Prozesses steht, werden neben den zuvor beschriebenen Informationen noch weitere Informationen zugrunde gelegt. Neben der Bewegungsmatrix B (A, D) werden noch eine Umgebungsmatrix U (E, D) und eine Fahrspurmatrix F (L, D) als Basismatrizen bei der Berechnung berücksichtigt.

Die Verarbeitungseinheit 4 weist einen nicht dargestellten Datenspeicher auf, in dem ein Flurplan der Logistikeinrichtung 8 hinterlegt ist. Der Datenspeicher kann direkt in der Verarbeitungseinheit 4 implementiert sein. Es kann sich ebenso um einen an einem anderen Ort befindlichen Datenspeicher handeln, so dass die erforderlichen Informationen an die Verarbeitungseinheit 4 über eine Datenverbindung, insbesondere eine drahtlose Datenverbindung, übertragen werden. In dem Flurplan sind Informationen betreffend in der Logistikeinrichtung 8 vorhandene Fahrspuren 12 hinterlegt. Die Fahrspur 12 weist wie üblich Knoten 12a und Kanten 12b auf. Ferner umfasst der Flurplan Informationen zu Intralogistik-spezifischen Elementen 14. Beispielhaft sind diese Intralogistik-spezifischen Elemente 14 in Fig. 3 das Regal 16, eine Wand 18, die in dieser Wand 18 vorhandene Durchfahrt 20 sowie die Be- und Entladezone 21.

In der Darstellung von Fig. 5 sind Parameter, welche die Fahrspur 12 beschreiben, mit "Road Map" bezeichnet. Parameter, die eine Umgebung sowohl der Fahrspur 12 als auch der Intralogistik-spezifischen Elemente 14 beschreiben, sind als "Environment" bezeichnet. Die aus der "Road Map" entnommenen Informationen sind gekennzeichnet durch einen Fahrspurenvektor [L, N, 3]. Dabei beschreibt L ein Segment des Fahrspurengraphs, beispielsweise eine Kante des Fahrspurengraphs, N eine Anzahl von Segmenten, die in dem Fahrspurenvektor vorhanden sind, und 3 eine Dimension des oder der Segmente.

Der Fahrspurvektor [L, N, 3] wird einem Fahrspurkodierer LE, auch bezeichnet als "Lane Encoder", zugeführt. Der Fahrspurkodierer kann wiederum als neuronales Netz N implementiert sein. Der Fahrspurkodierer LE erzeugt einen Vektor [L, D], der ein entsprechendes Segment des Fahrspurengraphs 12, welches beispielsweise aus N-Kanten zusammengesetzt ist, beschreibt. Dieser Vektor wird wiederum mit sogenannten "Learnable Type Embeddings" kombiniert, wobei diese dieselbe Dimensionalität aufweisen. Bei diesen handelt es sich um Parameter, die spezifische Eigenschaften des Typs der Fahrspur 12 beschreiben und von einer Position des Segments der Fahrspur 12 innerhalb der Logistikeinrichtung 8 abhängig sind. Beispielsweise ist in einem engen Bereich der Logistikeinrichtung 8 die maximal mögliche Geschwindigkeit, die ein Fahrzeug auf diesem Abschnitt des Fahrspurengraphs 12 fahren soll, geringer als in Bereichen des Fahrspurengraphs 12, welche nicht einer solchen, die Manövrierfähigkeit des Flurförderzeugs möglicherweise einschränkenden Randbedingung unterworfen sind. Die die spezifischen Eigenschaften des Segments der Fahrspur 12 beschreibenden Parameter werden mit dem kombiniert und die entsprechenden Parameter oder Informationen werden in der Fahrspurmatrix F [L, D] abgelegt.

Neben der zuerst beschriebenen Bewegungsmatrix B [A, D] und der soeben beschriebenen Fahrspurmatrix F [L, D] wird der Trajektorienberechnung noch die Umgebungsmatrix U [E, D] zugrunde gelegt.

Die Umgebungsinformationen, bezeichnet als "Environment", werden in einem Vektor [E, M, 3] beschrieben und ebenfalls der Flurkarte der Logistikeinrichtung 8 entnommen. Für ein entsprechendes Umgebungsobjekt E werden Parameter M der Dimension 3 zur Beschreibung verwendet. In einem Umgebungsenkoder EE, auch bezeichnet als "Env Encoder", der wiederum als neuronales Netz N implementiert sein kann erfolgt wiederum eine Verarbeitung, deren Ergebnis der Vektor [E, D]ist. Dieser beschreibt die Art der Umgebung eines Objekts E in der Dimension D. In dem sich anschließenden Schritt, bezeichnet mit "Learnable Type Embeddings" wird dieser mit gelernten Informationen der gleichen Dimensionalität kombiniert. Es werden die in der Logistikeinrichtung 8 vorhandenen Intralogistik-spezifischen Elemente 14 der Logistikeinrichtung 8 mittels geeigneter Parameter charakterisiert. Diese betreffen beispielsweise eine Lage und/oder Dimension oder auch die Funktion der entsprechenden Intralogistik-spezifischen Elemente 14. Konkret betrifft dies beispielsweise Lage und/oder Dimension von einem Tor, der Durchfahrt 20, einem NichtFahrbereich, einer Lagerposition, einer Abstellposition, einer Ladestation zum Auflagen von elektrisch betriebenen Flurförderzeugen 2, das Regal 16, einem Abstellbereich für Flurförderzeuge 2 und/oder die Be- und Entladezone 21. Nachdem die Parameter, welche die Umgebung beschreiben, mit diesen für die Logistikeinrichtung 8 spezifischen Parametern kombiniert wurden, werden die entsprechenden Informationen in einer Umgebungsmatrix U [E, D] abgelegt.

In einem in Fig. 5 zentral dargestellten Schritt, der mit "cat" bezeichnet ist, werden die Bewegungsmatrix B, die Fahrspurmatrix F und die Umgebungsmatrix U zu einer kombinierten Matrix K zusammengefügt. Das Ergebnis ist die größere kombinierten Matrix K [A + L + E, D], in der alle drei Quellenmatrizen, nämlich die Bewegungsmatrix B [A, D], die Fahrspurmatrix F [L, D] und die Umgebungsmatrix U [E, D] enthalten sind. Die kombinierte Matrix K beinhaltet Informationen über alle in der Szene vorhanden Elemente. Dies sind gemäß dem in Fig. 3 dargestellten Ausführungsbeispiel die historischen Bewegungsdaten des Objekts 10 sowie die oben erläuterten Informationen zu den Umgebungselementen. Gemäß dem dargestellten Ausführungsbeispiel wird lediglich ein einziges Objekt 10 erfasst. Es können wie oben bereits erwähnt jedoch auch mehrere Objekte 10 erfasst werden. In einem solchen Fall sind in der kombinierten Matrix K auch die historische Bewegungsdaten dieser weiteren Objekte vorhanden.

Die kombinierte Matrix K wird anschließend in einem Positionierungsschritt, der mit "pos" bezeichnet ist, in ein gemeinsames Koordinatensystem überführt. Bisher sind jegliche Strukturen, beispielsweise die historische Trajektorie des Objekts 10 in der Bewegungsmatrix B [A, D] oder die Abmessungen und die Form des Regals 16 in der Umgebungsmatrix U [E, D] jeweils in lokalen Koordinatensystemen dargestellt, deren Ursprung beispielsweise in der Mitte einer Trajektorie oder im Zentrum des Regals 16 liegt. Der mit "Positional Embedding" bezeichnete Schritt und die daraus abgeleitete Projektion der Positionen, bezeichnet mit "Pos Projection" gibt Informationen über die Positionierung dieser Elemente in Hinblick auf ein globales Koordinatensystem. Um die Bewegung des Objekts 10 in einen sinnvollen Zusammenhang zu den Elementen der Umgebung zu setzen, ist es erforderlich diese in ein gemeinsames Koordinatensystem zu überführen. So kann der Szenenkodierer SE, dem die in das globale Koordinatensystem überführte kombinierte Matrix K* [A + L + E, D], zugeführt wird, einen sinnvollen Zusammenhang zwischen den einzelnen Elementen lernen. Beispielsweise kann ein Linksabbiegevorgang auf den jeweiligen Agenten, also beispielsweise das Objekt 10, bezogen lokal immer durch eine ähnliche Kurve beschrieben werden, egal wo dieser im globalen Raum durchgeführt wird. Im Kontext der Umgebung ergeben sich hingegen für diese an sich ähnlichen Kurven sehr unterschiedliche Aussagen. Gleiches gilt auch beispielsweise für unterschiedliche Fahrspurformen oder Umgebungsformen.

Die kombinierte Matrix K* wird einem in der Verarbeitungseinheit 4 implementierten Szenenkodierer SE, in Fig. 5 als "Scene Encoder" bezeichnet, der als neuronales Netz N implementiert ist, als Eingangsdaten bereitgestellt. In dem neuronalen Netz N werden Informationen, welche das typische und von dem neuronalen Netz gelernte Verhalten von Flurförderzeugen oder anderen Objekten in bestimmten Bereichen der Logistikeinrichtung 8 oder in bestimmten Verkehrssituationen wie sie in einer Logistikeinrichtung 8 auftreten, kennzeichnen, berücksichtigt. Unter Anwendung dieser gelernten Zusammenhänge wird die kombinierte Matrix K* zu einer Szenenmatrix S [A + L + E, D], die ebenso die Dimension D hat, verarbeitet. Beispielsweise wird die Information berücksichtigt, dass das in Fig. 3 gezeigte Objekt 10, bei dem es sich beispielhaft um ein Flurförderzeug handelt, mit geringer Wahrscheinlichkeit zu der Be- und Entladezone 21 zurückkehren wird, da die historischen Positionsdaten 11a, 11b angeben (ebenso die historische Fahrzeugtrajektorie 13), dass sich das Objekt 10 von der Be- und Entladezone 21 wegbewegt. Es kann ferner die Information berücksichtigt werden, dass das als Flurförderzeug erkannte Objekt 10 (es kann ebenso erkannt werden, ob dieses eine Last befördert oder nicht), das Regal 16 mit geringer Wahrscheinlichkeit von der Rückseite anfahren wird, da von dieser Seite her keine Lasten in das Regal 16 eingestapelt werden können. Es kann ferner die Information berücksichtigt werden, dass das Objekt 10 auch den gebotenen Abstand zu den Wänden 18 der Logistikeinrichtung 8 einhält und seine Fahrspur diese Wände nicht kreuzen wird. Ferner kann berücksichtigt werden, dass sich das Objekt 10 mit großer Wahrscheinlichkeit auf einem Fahrspurengraph 12 bewegen wird, da sich seine Routenplanung an der Lage dieses Fahrspurengraphs 12 orientiert.

So ist der in der Verarbeitungseinheit 4 des Flurförderzeugs 2 als neuronales Netz N implementierte Szenenkodierer SE in der Lage, als Ausgabedaten einen Parametersatz auszugeben, der die Bewegung des Objekts 10 in der Umgebung charakterisiert. Dieser Parametersatz wird in der Szenenmatrix S [A + L + E, D], abgelegt.

In einem Dekodierer D, in Fig. 5 auch als "Decoder" bezeichnet, wird die gemäß der gelernten Zusammenhänge erzeugte Szenenmatrix S zurücktransformiert, so dass sich aus dieser jeweils mit einer Wahrscheinlichkeit versehene vorausgesagte Trajektorien 22 des Objekts 10 bestimmen lassen. Diese jeweils mit einer Wahrscheinlichkeit versehenen Trajektorien werden in Fig. 5 als "Scored Future Trajectories" bezeichnet. Die angegebenen Ziffern sollen die entsprechenden Wahrscheinlichkeiten der Trajektorien darstellen.

In der Darstellung von Fig. 3 sind beispielhaft drei vorausgesagte Trajektorien 22a, 22b, 22c dargestellt. Die Trajektorie 22c wird mit der geringsten Eintrittswahrscheinlichkeit versehen, da es äußerst unwahrscheinlich ist, dass das als Flurförderzeug erkannte Objekt 10 das Regal 16 von der Rückseite her anfahren wird. Die Trajektorie 22a nimmt einen Weg des Objekts 10 durch die Durchfahrt 20 an. Die Trajektorie 22b nimmt an, dass das Objekt 10 dem segmentweise dargestellten Fahrspurengraph 12 folgt und beispielsweise eine aufgenommene Last in das Regal 16 einstapeln wird.

Anhand der vorausgesagten Trajektorien, welche gemeinsam mit Bezugszeichen 22 bezeichnet werden sollen, kann das Flurförderzeug 2 seine eigenen Fahrbewegungen optimieren und anpassen. In einer Situation, in der beispielsweise das Flurförderzeug 2 mit wesentlich höherer Geschwindigkeit als das Objekt 10 fährt, kann das Flurförderzeug 2 die Be- und Entladezone 21 problemlos mit unverminderter Geschwindigkeit anfahren, da nicht davon auszugehen ist, dass das Objekt 10 zu dieser zurückkehrt. Ferner könnte das Flurförderzeug 2, sofern es beabsichtigt, die Durchfahrt 20 zu durchfahren, seine Fahrgeschwindigkeit geringfügig reduzieren, um abzuwarten, ob das Objekt 10 ebenfalls die Durchfahrt 20 durchfährt oder in Richtung des Regals 16 abbiegt. Das Flurförderzeug 2 wird auf diese Weise in die Lage versetzt, dynamisch auf das Verkehrsgeschehen in seiner Umgebung zu reagieren. Dies trifft insbesondere auf Anwendungsfälle zu, in denen das Flurförderzeug 2 nicht nur das Fahrverhalten eines einzelnen Objekts 10, sondern das Fahrverhalten mehrerer in seiner Umgebung befindlichen Objekte 10 analysiert und seine eigenen Fahrbewegungen entsprechend darauf anpasst.

Alle genannten Merkmale, auch die den Zeichnungen allein zu entnehmenden sowie auch einzelnen Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Flurförderzeug
- 4: Verarbeitungseinheit
- 6: Sensor
- 8: Logistikeinrichtung
- 10: Objekt
- 11: Position
- 11a, 11b: historische Positionsdaten
- 12: Fahrspur
- 12a: Knoten
- 12b: Kanten
- 13: historische Objekttrajektorie
- 14: Intralogistik-spezifisches Element
- 16: Regal
- 18: Wand
- 20: Durchfahrt
- 21: Be- und Entladezone
- 22: Trajektorien
- 22a..c: erste..dritte Trajektorie

- MV: Objektbewegungsmerkmalsvektor
- B: Bewegungsmatrix
- F: Fahrspurmatrix
- U: Umgebungsmatrix
- K: kombinierte Matrix
- S: Szenenmatrix
- N: neuronales Netz
- SE: neuronales Netz, Szenenkodierer (Scene Encoder)
- AE: neuronales Netz, Agentenkodierer (Agent Encoder)
- OC: neuronales Netz, Objektbewegungskodierer
- LE: neuronales Netz, Fahrspurkodierer (Lane Encoder)
- EE: neuronales Netz, Umgebungskodierer (Environmental Encoder)
- D: Dekodierer

## Patentansprüche

1. Flurförderzeug (2), welches für den autonomen Fahrbetrieb in einer Logistikeinrichtung (8) eingerichtet ist, aufweisend eine Verarbeitungseinheit (4) und zumindest einen Sensor (6), wobei
- der Sensor (6) dazu eingerichtet ist, in einem Umgebungsbereich des Flurförderzeugs (2) 3D Scandaten zu erfassen und der Verarbeitungseinheit (4) bereitzustellen,
die Verarbeitungseinheit (4) dazu eingerichtet ist,
- unter Anwendung eines 3D-Objekterkennungmodells in den 3D Scandaten eine Objekterkennung durchzuführen und eine Position (11) und ein Typ eines erkannten Objekts (10) zu erfassen und unter Anwendung eines Trackingmodells anhand von vorhandenen historischen Positionsdaten (11a, 11b) des Objekts (10) und der erfassten Position (11) des Objekts (10) ein Objekttracking durchzuführen,
und einen Objektbewegungsmerkmalsvektor (MV) zu erzeugen, der einen Bewegungsverlauf des Objekts (10) beschreibt, und
- in dem Objektbewegungsmerkmalsvektor (MV) vorhandene Vektorkomponenten mit Parametern zu kombinieren, die spezifische Eigenschaften des erkannten Objekttyps beschreiben, und in einer Bewegungsmatrix (B) abzulegen, und wobei in der Verarbeitungseinheit (4) ein Datenspeicher, aufweisend einen Flurplan der Logistikeinrichtung (8), vorhanden ist, wobei der Flurplan eine Vielzahl von Intralogistik-spezifischen Elementen (14) und eine Vielzahl von Fahrspuren (12) aufweist, und die Verarbeitungseinheit (4) ferner dazu eingerichtet ist,
- Parameter, die spezifische Eigenschaften eines Typs der Fahrspur (12) beschreiben, mit einem Segment der Fahrspur (12) zu kombinieren und in einer Fahrspurmatrix (F) abzulegen,
- Parameter, die spezifische Eigenschaften eines Typs des Intralogistik-spezifischen Elements (14) beschreiben, mit dem Intralogistik-spezifischen Element (14) zu kombinieren und in einer Umgebungsmatrix (U) abzulegen,
- die Bewegungsmatrix (B), die Fahrspurmatrix (F) und die Umgebungsmatrix (U) zu einer kombinierten Matrix (K) zu verknüpfen, wobei
- in der Verarbeitungseinheit (4) ein als neuronales Netz implementierter Szenenkodierer (N, SE) vorhanden ist und die Verarbeitungseinheit (4) dazu eingerichtet ist, die kombinierte Matrix (K) in dem Szenenkodierer (N, SE) zu verarbeiten, welcher als Ausgabedaten eine Szenenmatrix (S) erzeugt, die den in der Bewegungsmatrix (B) beschriebene Bewegungsverlauf des Objekts (10) in der von der Fahrspurmatrix (F) und der Umgebungsmatrix (U) beschriebenen Umgebung entsprechend einen gelernten Zusammenhang der Bewegung des Objekts (10) in der Umgebung charakterisiert,
- die Szenenmatrix (S) zurück zu transformieren in eine Mehrzahl von jeweils mit einer Wahrscheinlichkeit versehenen vorausgesagten Trajektorien (22) des Objekts (10).

2. Flurförderzeug (2) nach Anspruch (1), wobei die Verarbeitungseinheit (4) einen als neuronales Netz implementierten Objektbewegungskodierer (N, OC) aufweist, der die in dem Objektbewegungsmerkmalsvektor (MV) vorhandene Vektorkomponenten mit Parametern kombiniert, die spezifische Eigenschaften des erkannten Objekttyps beschreiben, und als Ausgabedaten die Bewegungsmatrix (B) erzeugt, wobei der Objektbewegungskodierer (OC) ein auf der Grundlage von in einer, insbesondere der, Logistikeinrichtung (8) gewonnenen Informationen vortrainiertes neuronales Netz (N, OC) ist.

3. Flurförderzeug (2) nach Anspruch 1 oder 2, wobei die die spezifischen Eigenschaften des Objekttyps beschreibenden Parameter, welche zur Kombination mit den Vektorkomponenten des Objektbewegungsmerkmalsvektors (MV) vorgesehen sind, zeitlich invariante, eine Bewegungsfähigkeit des Objekts (10) kennzeichnende Parameter sind.

4. Flurförderzeug (2) nach einem der vorhergehenden Ansprüche, wobei die spezifischen Eigenschaften des Typs der Fahrspur (12) beschreibenden Parameter von einer Position der Fahrspur (12) innerhalb der Logistikeinrichtung (8) abhängig sind.

5. Flurförderzeug (2) nach einem der vorhergehenden Ansprüche, wobei die Intralogistik-spezifischen Elemente (14) der Logistikeinrichtung (8) Infrastrukturelemente der Logistikeinrichtung (8) sind, die insbesondere durch Parameter beschreibend eine Lage und/oder Dimension von zumindest einem Tor, einer Durchfahrt (20), einem Nichtfahrbereich, einer Lagerposition, einer Abstellposition, einer Ladestation, einem Regal (16), einem Abstellbereich für Flurförderzeuge (2) und/oder einer Be- oder Entladezone (21) gekennzeichnet sind.

6. Flurförderzeug (2) nach einem der vorhergehenden Ansprüche, wobei der Sensor (6) und die Verarbeitungseinheit (4) dazu eingerichtet sind, durch Erfassen von 3D Scandaten, Erzeugen von Punktwolken und Anwendung des 3D-Objekterkennungmodells auf die Punktwolken eine 3D-Objekterkennung in der Punktwolke durchzuführen und Positionsdaten des Objekts (10) für unterschiedliche Zeitpunkte zu bestimmen.

7. Flurförderzeug (2) nach einem der vorhergehenden Ansprüche, wobei die Verarbeitungseinheit (4) ferner dazu eingerichtet ist, die Funktionalität des autonomen Fahrbetriebs bereitzustellen, wobei die Verarbeitungseinheit (4) ferner dazu eingerichtet ist dieser Funktionalität die Mehrzahl von jeweils mit einer Wahrscheinlichkeit versehenen vorausgesagten Trajektorien (22) des Objekts (10) bereitzustellen.

8. Verfahren zum Betreiben eines Flurförderzeugs (2), welches für den autonomen Fahrbetrieb eingerichtet ist, in einer Logistikeinrichtung (8), wobei das Flurförderzeug (2) eine Verarbeitungseinheit (4) und zumindest einen Sensor (6) aufweist, und wobei
- der Sensor (6) in einem Umgebungsbereich des Flurförderzeugs (2) 3D Scandaten erfasst und der Verarbeitungseinheit (4) bereitstellt,
die Verarbeitungseinheit (4)
- ein 3D-Objekterkennungmodell auf die 3D Scandaten anwendet, in den 3D Scandaten eine Objekterkennung durchführt und eine Position (11) und einen Typ eines erkannten Objekts (10) erfasst, und ein Trackingmodell auf die erkannten Objekte (10) anwendet und anhand von vorhandenen historischen Positionsdaten (11a, 11b) des Objekts (10) und der erfassten Position (11) des Objekts (10) ein Objekttracking durchführt,
und einen Objektbewegungsmerkmalsvektor (MV) erzeugt, der einen Bewegungsverlauf des Objekts (10) beschreibt, und
- in dem Objektbewegungsmerkmalsvektor (MV) vorhandene Vektorkomponenten mit Parametern kombiniert, die spezifische Eigenschaften des erkannten Objekttyps beschreiben, und in einer Bewegungsmatrix (B) ablegt, und wobei
in einem Datenspeicher der Verarbeitungseinheit (4) ein Flurplan der Logistikeinrichtung (8) vorhanden ist, wobei der Flurplan eine Vielzahl Intralogistik-spezifischen Elementen (14) und eine Vielzahl von Fahrspuren (12) aufweist, und die Verarbeitungseinheit (4) ferner
- Parameter, die spezifische Eigenschaften eines Typs der Fahrspur beschreiben, mit einem Segment der Fahrspur (12) kombiniert und in einer Fahrspurmatrix (F) ablegt und
- Parameter, die spezifische Eigenschaften eines Typs des Intralogistik-spezifischen Elements (14) beschreiben, mit dem Intralogistik-spezifischen Element (14) zu kombinieren und in einer Umgebungsmatrix (U) ablegt,
- die Bewegungsmatrix (B), die Fahrspurmatrix (F) und die Umgebungsmatrix (U) zu einer kombinierten Matrix (K)verknüpft, wobei
- in der Verarbeitungseinheit (4) ein als neuronales Netz (N) implementierter Szenenkodierer (SE, N) vorhanden ist, und die Verarbeitungseinheit (4) die kombinierte Matrix (K) in dem Szenenkodierer (SE, N) verarbeitet, welcher als Ausgabedaten eine Szenenmatrix (S) erzeugt, die den in der Bewegungsmatrix (B) beschriebene Bewegungsverlauf des Objekts (10) in der von der Fahrspurmatrix (F) und der Umgebungsmatrix (U) beschriebenen Umgebung entsprechend einen gelernten Zusammenhang der Bewegung des Objekts (10) in der Umgebung charakterisiert,
- die Szenenmatrix (S) zurück transformiert wird, in eine Mehrzahl von jeweils mit einer Wahrscheinlichkeit versehenen vorausgesagten Trajektorien (22) des Objekts (10).

9. Verfahren nach Anspruch 8, wobei die Verarbeitungseinheit (4) einen als neuronales Netz implementierten Objektbewegungskodierer (OC, N) aufweist, der die in dem Objektbewegungsmerkmalsvektor (MV) vorhandene Vektorkomponenten mit Parametern kombiniert, die spezifische Eigenschaften des erkannten Objekttyps beschreiben, und als Ausgabedaten die Bewegungsmatrix (B) erzeugt, wobei der Objektbewegungskodierer (OC, N) ein auf der Grundlage von in einer, insbesondere der, Logistikeinrichtung (8) gewonnenen Informationen vortrainiertes neuronales Netz (N, OC) ist.

10. Verfahren nach Anspruch 8 oder 9, wobei die die spezifischen Eigenschaften des Objekttyps beschreibenden Parameter, welche mit den Vektorkomponenten des Objektbewegungsmerkmalsvektors (MV) kombiniert werden, zeitlich invariante, eine Bewegungsfähigkeit des Objekts (10) kennzeichnende Parameter sind.

11. Verfahren nach einem der Ansprüche 8 bis 10, wobei die spezifischen Eigenschaften des Typs der Fahrspur (12) beschreibenden Parameter von einer Position der Fahrspur (12) innerhalb der Logistikeinrichtung (8) abhängig sind.

12. Verfahren nach einem der Ansprüche 8 bis 11, wobei die als Umgebungselemente (14) der Logistikeinrichtung (8) berücksichtigten Intralogistik-spezifischen Elemente (14) Infrastrukturelemente der Logistikeinrichtung (8) sind, die insbesondere durch Parameterbeschreibend: eine Lage und/oder Dimension von zumindest einem Tor, einer Durchfahrt (20), einem Nichtfahrbereich, einer Lagerposition, einer Abstellposition, einer Ladestation, einem Regal (16), einem Abstellbereich für Flurförderzeuge (2) und/oder einer Be- oder Entladezone (21) gekennzeichnet sind.

13. Verfahren nach einem der Ansprüche 8 bis 12, wobei der Sensor (6) und die Verarbeitungseinheit (4) 3D Scandaten erfassen, Punktwolken erzeugen und das 3D-Objekterkennungmodell auf die Punktwolken anwenden, eine 3D-Objekterkennung in der Punktwolke durchführen und Positionsdaten des Objekts (10) für unterschiedliche Zeitpunkte bestimmen.

14. Verfahren nach einem der Ansprüche 8 bis 13, wobei die Verarbeitungseinheit (4) ferner die Funktionalität für den autonomen Fahrbetrieb des Flurförderzeugs (2) bereitstellt, wobei dieser Funktionalität die Mehrzahl von jeweils mit einer Wahrscheinlichkeit versehenen vorausgesagten Trajektorien (22) des Objekts (10) bereitgestellt werden.

## Claims

1. An industrial truck (2), which is configured for autonomous driving operation in a logistics facility (8), comprising a processing unit (4) and at least one sensor (6), wherein
- the sensor (6) is configured to record 3D scan data in a surrounding region of the industrial truck (2) and to provide said data to the processing unit (4),
the processing unit (4) is configured
- to carry out object recognition by applying a 3D object recognition model in the 3D scan data and to detect a position (11) and a type of a recognized object (10) and to carry out object tracking by applying a tracking model based on available historical position data (11a, 11b) of the object (10) and based on the detected position (11) of the object (10),
and to generate an object movement feature vector (MV) that describes a movement course of the object (10), and
- to combine vector components available in the object movement feature vector (MV) with parameters that describe specific properties of the recognized object type and to store same in a movement matrix (B), and wherein
a data memory, comprising a floor plan of the logistics facility (8), is available in the processing unit (4), wherein the floor plan comprises a large number of intralogistics-specific elements (14) and a large number of travel lanes (12), and the processing unit (4) is further configured
- to combine parameters that describe specific properties of a type of the travel lane (12) with a segment of the travel lane (12) and to store same in a travel lane matrix (F),
- to combine parameters that describe specific properties of a type of the intralogistics-specific element (14) with the intralogistics-specific element (14) and to store same in a surroundings matrix (U),
- to link the movement matrix (B), the travel lane matrix (F), and the surroundings matrix (U) into a combined matrix (K),
wherein
- a scene encoder (N, SE) implemented as a neural network is available in the processing unit (4) and the processing unit (4) is configured to process the combined matrix (K) in the scene encoder (N, SE), which generates, as output data, a scene matrix (S) that characterizes the movement course of the object (10), described in the movement matrix (B), in the surroundings described by the travel lane matrix (F) and surroundings matrix (U) according to a learned context of the movement of the object (10) in the surroundings,
- to transform the scene matrix (S) back into a plurality of predicted trajectories (22) of the object (10) provided in each case with a probability.

2. The industrial truck (2) according to claim 1, wherein the processing unit (4) comprises an object movement encoder (N, OC) that is implemented as a neural network and that combines the vector components available in the object movement feature vector (MV) with parameters that describe specific properties of the recognized object type, and generates the movement matrix (B) as output data, wherein the object movement encoder (OC) is a neural network (N, OC) that is pretrained on the basis of information gathered in a, in particular the, logistics facility (8).

3. The industrial truck (2) according to claim 1 or 2, wherein the parameters that describe the specific properties of the object type and that are intended to be combined with the vector components of the object movement feature vector (MV) are temporally invariable parameters that characterize a mobility of the object (10).

4. The industrial truck (2) according to any one of the preceding claims, wherein the specific properties of the type of parameters describing the travel lane (12) depend on a position of the travel lane (12) within the logistics facility (8).

5. The industrial truck (2) according to any one of the preceding claims, wherein the intralogistics-specific elements (14) of the logistics facility (8) are infrastructure elements of the logistics facility (8) that are **characterized, in** particular, by parameters describing a location and/or dimension of at least one gate, a passageway (20), a no-driving region, a storage position, a parking position, a charging station, a rack (16), a parking region for industrial trucks (2), and/or a loading or unloading zone (21).

6. The industrial truck (2) according to any one of the preceding claims, wherein the sensor (6) and the processing unit (4) are configured, by recording 3D scan data, generating point clouds, and applying the 3D object recognition model to the point clouds, to carry out 3D object recognition in the point cloud and to determine position data of the object (10) for different points in time.

7. The industrial truck (2) according to any one of the preceding claims, wherein the processing unit (4) is further configured to provide the autonomous driving operation functionality, wherein the processing unit (4) is further configured to provide said functionality with the plurality of predicted trajectories (22) of the object (10) provided in each case with a probability.

8. A method for operating an industrial truck (2), configured for autonomous driving operation, in a logistics facility (8), wherein the industrial truck (2) comprises a processing unit (4) and at least one sensor (6), and wherein
- the sensor (6) records 3D scan data in a surrounding region of the industrial truck (2) and provides said data to the processing unit (4),
the processing unit (4)
- applies a 3D object recognition model to the 3D scan data, carries out object recognition in the 3D scan data, and detects a position (11) and a type of a recognized object (10), and applies a tracking model to the recognized objects (10) and carries out object tracking based on available historical position data (11a, 11b) of the object (10) and based on the detected position (11) of the object (10),
and generates an object movement feature vector (MV) that describes a movement course of the object (10), and
- to combine vector components available in the object movement feature vector (MV) with parameters that describe specific properties of the recognized object type and stores same in a movement matrix (B), and wherein
a floor plan of the logistics facility (8) is available in a data memory of the processing unit (4), wherein the floor plan comprises a large number of intralogistics-specific elements (14) and a large number of travel lanes (12), and the processing unit (4) further
- combines parameters that describe specific properties of a type of the travel lane with a segment of the travel lane (12) and stores same in a travel lane matrix (F) and
- to combine parameters that describe specific properties of a type of the intralogistics-specific element (14) with the intralogistics-specific element (14) and stores same in a surroundings matrix (U),
- links the movement matrix (B), the travel lane matrix (F), and the surroundings matrix (U) into a combined matrix (K), wherein
- a scene encoder (SE, N) implemented as a neural network (N) is available in the processing unit (4), and the processing unit (4) processes the combined matrix (K) in the scene encoder (SE, N), which generates, as output data, a scene matrix (S) that characterizes the movement course of the object (10), described in the movement matrix (B), in the surroundings described by the travel lane matrix (F) and surroundings matrix (U) according to a learned context of the movement of the object (10) in the surroundings,
- the scene matrix (S) is transformed back into a plurality of predicted trajectories (22) of the object (10) provided in each case with a probability.

9. The method according to claim 8, wherein the processing unit (4) comprises an object movement encoder (OC, N) that is implemented as a neural network and that combines the vector components available in the object movement feature vector (MV) with parameters that describe specific properties of the recognized object type, and generates the movement matrix (B) as output data, wherein the object movement encoder (OC, N) is a neural network (N, OC) that is pretrained on the basis of information gathered in a, in particular the, logistics facility (8).

10. The method according to claim 8 or 9, wherein the parameters that describe the specific properties of the object type and that are combined with the vector components of the object movement feature vector (MV) are temporally invariable parameters that characterize a mobility of the object (10).

11. The method according to any one of claims 8 to 10, wherein the specific properties of the type of parameters describing the travel lane (12) depend on a position of the travel lane (12) within the logistics facility (8).

12. The method according to any one of claims 8 to 11, wherein the intralogistics-specific elements (14) taken into account as surroundings elements (14) of the logistics facility (8) are infrastructure elements of the logistics facility (8) that are **characterized, in** particular, by parameters describing: a location and/or dimension of at least one gate, a passageway (20), a no-driving region, a storage position, a parking position, a charging station, a rack (16), a parking region for industrial trucks (2), and/or a loading or unloading zone (21).

13. The method according to any one of claims 8 to 12, wherein the sensor (6) and the processing unit (4) record 3D scan data, generate point clouds and apply the 3D object recognition model to the point clouds, carry out 3D object recognition in the point cloud, and determine position data of the object (10) for different points in time.

14. The method according to any one of claims 8 to 13, wherein the processing unit (4) further provides the autonomous driving operation functionality of the industrial truck (2), wherein said functionality is provided with the plurality of predicted trajectories (22) of the object (10) provided in each case with a probability.

## Revendications

1. Chariot de manutention (2) conçu pour une conduite autonome dans une installation logistique (8), comprenant une unité de traitement (4) et au moins un capteur (6), dans lequel
- le capteur (6) est conçu pour acquérir des données de balayage 3D dans une zone environnante du chariot de manutention (2) et pour les transmettre à l'unité de traitement (4),
l'unité de traitement (4) est conçue pour
- effectuer une reconnaissance d'objets dans les données de balayage 3D au moyen d'un modèle de reconnaissance d'objets 3D, de déterminer une position (11) et un type d'un objet reconnu (10), et d'effectuer un suivi d'objet au moyen d'un modèle de suivi sur la base de données de position historiques disponibles (11a, 11b) de l'objet (10) et de la position détectée (11) de l'objet (10),
et générer un vecteur (MV) de caractéristiques de mouvement de l'objet, qui décrit une trajectoire de mouvement de l'objet (10), et
- combiner les composantes vectorielles présentes dans le vecteur (MV) de caractéristiques de mouvement de l'objet avec des paramètres décrivant des propriétés spécifiques du type d'objet détecté, et les enregistrer dans une matrice de mouvement (B), et dans lequel,
dans l'unité de traitement (4), une mémoire de données contenant un plan au sol de l'installation logistique (8) est présente, le plan au sol présentant une pluralité d'éléments (14) spécifiques à l'intralogistique et une pluralité de voies de circulation (12), et l'unité de traitement (4) est en outre agencée pour
- combiner des paramètres décrivant les propriétés spécifiques d'un type de voie de circulation (12) avec un segment de la voie de circulation (12) et les enregistrer dans une matrice (F) de voies de circulation,
- combiner des paramètres décrivant les propriétés spécifiques d'un type d'élément (14) spécifique à l'intralogistique avec l'élément (14) spécifique à l'intralogistique et les enregistrer dans une matrice d'environnement (U),
- combiner la matrice de mouvement (B), la matrice (F) de voies de circulation et la matrice d'environnement (U) pour former une matrice combinée (K),
- l'unité de traitement (4) présente un codeur de scène (N, SE) mis en œuvre sous la forme d'un réseau neuronal, et l'unité de traitement (4) est agencée pour traiter la matrice combinée (K) dans le codeur de scène (N, SE), lequel génère, en tant que données de sortie, une matrice de scènes (S) qui caractérise la trajectoire de mouvement de l'objet (10) décrite dans la matrice de mouvement (B) au sein de l'environnement décrit par la matrice (F) de voies de circulation et la matrice d'environnement (U), conformément à une relation apprise du mouvement de l'objet (10) dans l'environnement,
- retransformer la matrice de scènes (S) en une pluralité de trajectoires prédites (22) de l'objet (10), chacune étant associée à une probabilité.

2. Chariot de manutention (2) selon la revendication 1, dans lequel l'unité de traitement (4) présente un codeur (N, OC) de mouvement d'objet mis en œuvre sous la forme d'un réseau neuronal, qui combine les composantes vectorielles présentes dans le vecteur (MV) de caractéristiques de mouvement de l'objet avec des paramètres décrivant des propriétés spécifiques du type d'objet détecté, et génère, en tant que données de sortie, la matrice de mouvement (B), le codeur (OC) de mouvement d'objet étant un réseau neuronal (N, OC) pré-entraîné sur la base d'informations obtenues dans une installation logistique (8), plus précisément, l'installation logistique (8) en question.

3. Chariot de manutention (2) selon la revendication 1 ou la revendication 2, dans lequel les paramètres décrivant les propriétés spécifiques du type d'objet, qui sont destinés à être combinés avec les composantes vectorielles du vecteur (MV) de caractéristiques de mouvement de l'objet, sont des paramètres invariants dans le temps, caractérisant une capacité de mouvement de l'objet (10).

4. Chariot de manutention (2) selon l'une des revendications précédentes, dans lequel les paramètres décrivant les propriétés spécifiques du type de voie de circulation (12) dépendent d'une position de la voie de circulation (12) au sein de l'installation logistique (8).

5. Chariot de manutention (2) selon l'une des revendications précédentes, dans lequel les éléments (14) spécifiques à l'intralogistique de l'installation logistique (8) sont des éléments d'infrastructure de l'installation logistique (8), qui sont notamment **caractérisés par** des paramètres décrivant une position et/ou une dimension d'au moins une porte, un passage (20), une zone interdite à la circulation, une position de stockage, une position de stationnement, une station de chargement, un rayonnage (16), une zone de stationnement pour des chariots de manutention (2) et/ou une zone de chargement ou de déchargement (21).

6. Chariot de manutention (2) selon l'une des revendications précédentes, dans lequel le capteur (6) et l'unité de traitement (4) sont agencés pour, par l'acquisition de données de balayage 3D, la génération de nuages de points et l'application du modèle de reconnaissance d'objets en 3D à ces nuages de points, effectuer une reconnaissance d'objets en 3D dans le nuage de points et déterminer les données de position de l'objet (10) à différents instants.

7. Chariot de manutention (2) selon l'une des revendications précédentes, dans lequel l'unité de traitement (4) est en outre conçue pour fournir la fonctionnalité de conduite autonome, l'unité de traitement (4) étant en outre conçue pour fournir à cette fonctionnalité la pluralité de trajectoires prédites (22) de l'objet (10), chacune étant associée à une probabilité.

8. Procédé d'exploitation d'un chariot de manutention (2), conçu pour une conduite autonome dans une installation logistique (8), le chariot de manutention (2) présentant une unité de traitement (4) et au moins un capteur (6), et dans lequel
- le capteur (6) acquiert des données de balayage 3D dans une zone environnante du chariot de manutention (2) et les transmet à l'unité de traitement (4),
l'unité de traitement (4) :
- applique un modèle de reconnaissance d'objets en 3D aux données de balayage 3D, effectue une reconnaissance d'objets dans les données de balayage 3D et détecte une position (11) ainsi qu'un type d'objet reconnu (10), et applique un modèle de suivi aux objets reconnus (10) et, au moyen de données de position historiques disponibles (11a, 11b) de l'objet (10) et de la position enregistrée (11) de l'objet (10),
et génère un vecteur (MV) de caractéristiques de mouvement de l'objet qui décrit une trajectoire de mouvement de l'objet (10), et
- combine les composantes vectorielles présentes dans le vecteur (MV) de caractéristiques de mouvement de l'objet avec des paramètres décrivant les propriétés spécifiques du type d'objet détecté, et les stocke dans une matrice de mouvement (B), et dans lequel
un plan au sol de l'installation logistique (8) est présent dans une mémoire de données de l'unité de traitement (4), le plan au sol présentant une pluralité d'éléments (14) spécifiques à l'intralogistique et une pluralité de voies de circulation (12), et l'unité de traitement (4), en outre :
- combine des paramètres décrivant les caractéristiques spécifiques d'un type de voie de circulation avec un segment de la voie de circulation (12) et les stocke dans une matrice (F) de voies de circulation, et
- combine les paramètres décrivant les propriétés spécifiques d'un type d'élément (14) spécifique à l'intralogistique avec l'élément (14) spécifique à l'intralogistique et les stocke dans une matrice d'environnement (U),
- combine la matrice de mouvement (B), la matrice (F) de voies de circulation et la matrice d'environnement (U) pour former une matrice combinée (K),
- l'unité de traitement (4) présente un codeur de scènes (SE, N) implémenté sous la forme d'un réseau neuronal (N), et l'unité de traitement (4) traite la matrice combinée (K) dans le codeur de scène (SE, N), lequel génère, en tant que données de sortie, une matrice de scènes (S) qui caractérise la trajectoire de l'objet (10) décrite dans la matrice de mouvement (B) au sein de l'environnement décrit par la matrice (F) de voies de circulation et la matrice d'environnement (U), conformément à une relation apprise concernant le mouvement de l'objet (10) dans l'environnement,
- la matrice de scènes (S) est retransformée en une pluralité de trajectoires prédites (22) de l'objet (10), chacune étant associée à une probabilité.

9. Procédé selon la revendication 8, dans lequel l'unité de traitement (4) comprend un codeur (OC, N) de mouvement d'objet mis en œuvre sous la forme d'un réseau neuronal, qui combine les composantes vectorielles présentes dans le vecteur (MV) de caractéristiques de mouvement d'objet avec des paramètres décrivant des propriétés spécifiques du type d'objet reconnu, et génère, en tant que données de sortie, la matrice de mouvement (B), le codeur (OC, N) de mouvement d'objet étant un réseau neuronal (N, OC) pré-entraîné sur la base d'informations obtenues dans une installation logistique (8), plus précisément l'installation logistique (8) en question.

10. Procédé selon la revendication 8 ou la revendication 9, dans lequel les paramètres décrivant les propriétés spécifiques du type d'objet, qui sont combinés avec les composantes vectorielles du vecteur (MV) de caractéristiques de mouvement de l'objet, sont des paramètres invariants dans le temps, caractérisant une capacité de mouvement de l'objet (10).

11. Procédé selon l'une des revendications 8 à 10, dans lequel les paramètres décrivant les propriétés spécifiques du type de voie de circulation (12) dépendent d'une position de la voie de circulation (12) au sein de l'installation logistique (8).

12. Procédé selon l'une des revendications 8 à 11, dans lequel les éléments (14) spécifiques à l'intralogistique, pris en compte en tant qu'éléments d'environnement (14) de l'installation logistique (8), sont des éléments d'infrastructure de l'installation logistique (8) qui sont notamment décrits par des paramètres indiquant : une position et/ou une dimension d'au moins une porte, un passage (20), une zone interdite à la circulation, une position de stockage, une position de stationnement, une station de chargement, un rayonnage (16), une zone de stationnement pour chariots de manutention (2) et/ou une zone de chargement ou de déchargement (21).

13. Procédé selon l'une des revendications 8 à 12, dans lequel le capteur (6) et l'unité de traitement (4) acquièrent des données de balayage 3D, génèrent des nuages de points et appliquent le modèle de reconnaissance d'objets 3D aux nuages de points, effectuent une reconnaissance d'objets 3D dans le nuage de points et déterminent les données de position de l'objet (10) à différents instants.

14. Procédé selon l'une des revendications 8 à 13, dans lequel l'unité de traitement (4) assure en outre la fonctionnalité de conduite autonome du chariot de manutention (2), cette fonctionnalité recevant la pluralité de trajectoires prédites (22) de l'objet (10), chacune étant associée à une probabilité.
